# EUROPÄISCHE PATENTSCHRIFT

(11) **EP 4 142 137 B1**
(45) Veröffentlichungstag und Bekanntmachung des Hinweises auf die Patenterteilung: **13.03.2024**
(21) Anmeldenummer: 21192613.4
(22) Anmeldetag: 23.08.2021
(51) Int. Cl.: H02M 7/49, H02M 1/00, B60L 58/22, B60L 3/00, B60L 15/00, B60L 58/10

(54) **SCHALTUNGSANORDNUNG UND VERFAHREN ZUR ERZEUGUNG EINER WECHSELSPANNUNG**
CIRCUIT ASSEMBLY AND METHOD FOR GENERATING AN ALTERNATING VOLTAGE
ENSEMBLE DE CIRCUITS ET PROCÉDÉ DE GÉNÉRATION D'UNE TENSION ALTERNATIVE

(43) Veröffentlichungstag der Anmeldung: 01.03.2023
(73) Patentinhaber: SAX Power GmbH, 89155 Erbach (DE)
(72) Erfinder: Xie, Anja, München (DE); Li, Boyang, 89075 Ulm (DE)
(74) Vertreter: Lorenz, Matthias

(56) Entgegenhaltungen:
- DE-A1-102011 004 248
- DE-A1-102014 215 773
- KR-A- 20150 078 815
- MARQUEZ A ET AL: "Communications scheme of a modular power conversion system", 2015 IEEE INTERNATIONAL CONFERENCE ON INDUSTRIAL TECHNOLOGY (ICIT), IEEE, 17. März 2015 (2015-03-17), Seiten 3034-3039, XP032785465, DOI: 10.1109/ICIT.2015.7125546 [gefunden am 2015-06-16]
- D'ARCO SALVATORE ET AL: "Power and balancing control considerations on modular multilevel converters for battery electric vehicles", 2013 15TH EUROPEAN CONFERENCE ON POWER ELECTRONICS AND APPLICATIONS (EPE), IEEE, 2. September 2013 (2013-09-02), Seiten 1-9, XP032505373, DOI: 10.1109/EPE.2013.6634386 [gefunden am 2013-10-16]
- QURAAN MAHRAN ET AL: "Design and Control of Modular Multilevel Converters for Battery Electric Vehicles", IEEE TRANSACTIONS ON POWER ELECTRONICS, INSTITUTE OF ELECTRICAL AND ELECTRONICS ENGINEERS, USA, Bd. 31, Nr. 1, Januar 2016 (2016-01), Seiten 507-517, XP011669908, ISSN: 0885-8993, DOI: 10.1109/TPEL.2015.2408435 [gefunden am 2015-09-21]

## Beschreibung

Die Erfindung betrifft eine Schaltungsanordnung zur Erzeugung einer Wechselspannung, aufweisend zumindest einen modularen Wechselrichter, der als Kaskade aus mehreren Wechselrichtereinheiten ausgebildet ist, eine Steuereinrichtung zur Konfiguration der Wechselrichtereinheiten, und ein Datenübertragungssystem zur Signalübertragung zwischen der Steuereinrichtung und den Wechselrichtereinheiten, gemäß Anspruch 1.

Die Erfindung betrifft ferner ein Energieversorgungssystem gemäß Anspruch 10 und eine elektrische Verbraucheranordnung gemäß Anspruch 11, insbesondere ein Elektrofahrzeug oder ein Haushaltsstromnetz.

Die Erfindung betrifft außerdem ein Verfahren gemäß Anspruch 12 zur Erzeugung einer Wechselspannung mittels eines modularen Wechselrichters, der als Kaskade aus mehreren Wechselrichtereinheiten ausgebildet ist, wobei jede der Wechselrichtereinheiten mit einer eigenen Gleichspannungsquelle verbunden ist.

In Energieversorgungssystemen kommen mitunter Batteriespeichersysteme zum Einsatz, wie beispielsweise Photovoltaik-Heimspeicher ("Solarbatterien") zur Speicherung von Ertragsüberschüssen von Photovoltaikanlagen oder Antriebsbatterien ("Hochvoltspeicher") zur Versorgung der Elektromotoren bzw. Antriebsaggregate von Elektrofahrzeugen. Solche Batteriespeichersysteme benötigen mitunter Batteriespannungen von mehreren hundert Volt. Da die Zellspannung einer einzelnen Batteriezelle jedoch lediglich einige Volt beträgt (z. B. 3,7 V bei einer Lithium-Ionen-Batterie), müssen viele einzelne Batteriezellen zu einem Batteriepack bzw. Akkupack (nachfolgend auch vereinfacht als "Batterie" bezeichnet) in Reihe geschaltet werden.

Fabrikationsbedingt weist jede Batteriezelle einer Batterie Unterschiede in ihren Eigenschaften auf, wie zum Beispiel der Zellkapazität, der Selbstentladungsrate und der Temperaturcharakteristik. Im Laufe der Zeit werden diese Differenzen durch Alterungseffekte zusätzlich verstärkt. Dies hat zur Folge, dass beim Ladevorgang einige Batteriezellen ihren maximalen Ladungsstand noch nicht erreicht haben, während andere Batteriezellen bereits vollständig aufgeladen sind. Das Überladen der bereits vollständig geladenen Batteriezellen kann schließlich zu deren Schädigung bis hin zu deren Zerstörung führen. Um dies zu verhindern, muss der Ladevorgang vorzeitlich abgebrochen werden.

Beim Entladevorgang verhält es sich ähnlich. Während einige Batteriezellen bereits vollkommen entladen sind, speichern andere Batteriezellen mitunter noch ausreichend Energie, um beispielsweise ein Elektrofahrzeug weiter anzutreiben. Beim Beispiel des Elektrofahrzeugs müsste schließlich der Fahrbetrieb vorzeitig abgebrochen werden, da ansonsten die schwächeren Batteriezellen tiefentladen werden, was zu deren Zerstörung führen kann.

Um einen reibungslosen Lade- und Entladevorgang zu gewährleisten, werden Batteriemanagementsysteme ("BMS") für den Ladungsausgleich zwischen den einzelnen Batteriezellen eingesetzt, vgl. J. Qi, D. Lu., "Review of Battery Cell Balancing Techniques", Australasian Universities Power Engineering Conference, AUPEC 2014, Curtin University, Perth, Australia, 28 Sept. 1 Oct. 2014.

Das zum Anmeldezeitpunkt verbreitetste Verfahren ist der so genannte passive Ladungsausgleich. Dabei werden bereits vollständig aufgeladene Batteriezellen über einen Widerstand wieder entladen, während die anderen Batteriezellen weiter aufgeladen werden. Ein offensichtlicher Nachteil dieses Verfahrens ist, dass hierbei wertvolle elektrische Energie verloren geht und dass das Verfahren zudem keine Lösung für den Entladevorgang bietet.

Die Probleme des passiven Ladungsausgleichs können mithilfe eines aktiven Ladungsausgleichs behoben werden. Bei dieser Technik sind jedoch aufwendige Schaltungen mit leistungselektronischen Bauteilen und komplizierter Steuerung erforderlich.

Zur Erzeugung von Drehspannungen, z. B. für die elektrischen Maschinen bzw. Elektromotoren in einem Elektrofahrzeug, werden häufig selbstgeführte Wechselrichter eingesetzt. In der Regel besteht ein solcher Wechselrichter aus sechs leistungselektronischen Ventilen, die zu einer Drehstrombrücke zusammengeschaltet sind. Bei diesem "Zweipunkt-Wechselrichter" werden die sinusförmigen Wechselspannungen aus pulsförmigen Spannungen mit drei Spannungsleveln (0, ±U_{DC}) erzeugt. Die Höhe der Spannungspulse ist von der Batteriespannung U_{DC} abhängig und damit konstant. Um Wechselspannungen zu generieren, kann als Stellglied die Zeitdauer der Spannungspulse variiert werden. Sie wird in der Regel mit dem Verfahren der Pulsweitenmodulation (PWM) berechnet. In diesem Fall finden sich in den Wechselspannungen jedoch hohe Störspannungen in den überlagerten Frequenzen. Um die Spannungsoberschwingungen zu reduzieren ist es bekannt, die Taktfrequenzen des Wechselrichters zu erhöhen. In der Regel liegen die Taktfrequenzen eines modernen Wechselrichters daher im Bereich mehrerer kHz bis zu 100 kHz. Allerdings steigen die Schaltverluste der Wechselrichter proportional zu deren Taktfrequenz.

Um diese Probleme zu umgehen, kann ein modularer Wechselrichter eingesetzt werden, wie beispielsweise in der DE 10 2011 004 248 A1 vorgeschlagen. Bei dieser Technik werden die einzelnen Batteriezellen nicht direkt, sondern über leistungselektronische H-Brückenschaltungen in Reihe geschaltet. Das Prinzip kann sich für einphasige Verbraucher, und sogar für dreiphasige Verbraucher eignen. Ein dreiphasiger modularer Wechselrichter kann beispielsweise aus zwei in Reihe geschalteten, einphasigen modularen Wechselrichtern gebildet werden, wie dies in der DE 10 2018 003 642 A1 vorgeschlagen wird.

Eine wesentliche Herausforderung bei der Erzeugung einer Wechselspannung aus einer Vielzahl einzelner Gleichspannungsquellen ist die Regelung und die daher erforderliche Kommunikation zwischen einer zentralen Steuer- und/oder Regeleinheit (nachfolgend als "Steuereinrichtung" bezeichnet) und den einzelnen, mit den jeweiligen Gleichspannungsquellen verbundenen Wechselrichtereinheiten.

Die wissenschaftliche Publikation Marquez A. et al.: "Communications scheme of a modular power conversion system", 2015 IEEE International Conference on Industrial Technology (ICIT), 17. März 2015, Seiten 3034-3039, betrifft ein gattungsgemäßes Datenbussystem für einen modularen Wechselrichter. Konkret wird ein asynchrones Master-Slave-Kommunikationssystem vorgeschlagen, bei dem die einzelnen Wechselrichtereinheiten auf Aufforderung der zentralen Steuereinrichtung die jeweils angefragten Daten übertragen. Zusammen mit einem weiteren Bussystem zur Ansteuerung der Wechselrichtereinheiten kann schließlich die gewünschte Wechselspannung erzeugt werden.

Vorzugsweise werden die Schaltzustände und Sollspannungen der einzelnen Gleichspannungsquellen von der Steuereinrichtung berechnet, die die Wechselrichtereinheiten dann auch entsprechend anweisen bzw. konfigurieren muss. Um die Wechselspannung mit hoher Genauigkeit zu erzeugen, insbesondere um auch feinste Spannungsstufen ausnutzen zu können, müssen die entsprechenden Schaltzustände, Spannungssollwerte und sonstigen Befehle mit hoher Geschwindigkeit von der Steuereinrichtung zu den einzelnen Wechselrichtereinheiten übertragen werden. Zur Erzeugung der Wechselspannung benötigt die Steuereinrichtung außerdem Zustandsinformationen von den einzelnen Gleichspannungsquellen, insbesondere möglichst akkurate Informationen zum aktuellen Ladezustand der Gleichspannungsquellen, die - ebenfalls mit hoher Geschwindigkeit - von den einzelnen Wechselrichtereinheiten zu der Steuereinrichtung übertragen werden müssen.

Um die Wechselspannung mit hoher Genauigkeit bzw. mit kleinen Spannungsstufen zu erzeugen, ist eine hohe Anzahl Gleichspannungsquellen bzw. Wechselrichtereinheiten vorzusehen. Das Datenübertragungssystem muss daher nicht nur zur bidirektionalen Übertragung mit hohen Datenraten geeignet sein, sondern außerdem eine Kommunikation zwischen einer großen Zahl von Kommunikationspartnern ermöglichen.

Die Qualität bzw. Güte der erzeugten Wechselspannung, also die Präzision, mit der die erzeugte Wechselspannung an ein reines Sinussignal angenähert ist, hängt entscheidend von den Kommunikationsmöglichkeiten zwischen der Steuereinrichtung und den Wechselrichtereinheiten und daher wesentlich von den technischen Merkmalen des Datenübertragungssystems ab. Es besteht somit Bedarf für ein geeignetes Datenübertragungssystem zur Kommunikation zwischen einer zentralen Steuereinrichtung und mehreren Wechselrichtereinheiten für die Erzeugung einer Wechselspannung.

In Anbetracht des bekannten Stands der Technik besteht die Aufgabe der vorliegenden Erfindung darin, eine Schaltungsanordnung zur Erzeugung einer Wechselspannung bereitzustellen, die die Wechselspannung mit besonders hoher Güte zu erzeugen vermag bzw. einem reinen Sinussignal möglichst präzise anzunähern vermag.

Der vorliegenden Erfindung liegt auch die Aufgabe zugrunde, ein Energieversorgungssystem zur Erzeugung einer Wechselspannung aus mehreren Gleichspannungsquellen bereitzustellen, das die Wechselspannung mit besonders hoher Güte zu erzeugen vermag bzw. einem reinen Sinussignal möglichst präzise anzunähern vermag.

Außerdem ist es Aufgabe der Erfindung, eine elektrische Verbraucheranordnung bereitzustellen, deren Primärverbraucher mit einer Wechselspannung versorgt wird, die aus mehreren Gleichspannungsquellen mit besonders hoher Güte erzeugt wird bzw. einem reinen Sinussignal möglichst präzise angenähert wird.

Es ist auch eine Aufgabe der Erfindung, ein Verfahren zur Erzeugung einer Wechselspannung aus mehreren Gleichspannungsquellen bereitzustellen, mittels dem die Wechselspannung mit besonders hoher Güte erzeugt werden kann bzw. mittels dem die Wechselspannung einem reinen Sinussignal möglichst präzise angenähert werden kann.

Die Aufgabe wird für die Schaltungsanordnung mit den in Anspruch 1 aufgeführten Merkmalen gelöst. Hinsichtlich des Energieversorgungssystems wird die Aufgabe durch die Merkmale des Anspruchs 10 und bezüglich der elektrischen Verbraucheranordnung durch Anspruch 11 gelöst. Betreffend das Verfahren wird die Aufgabe durch Anspruch 12 gelöst.

Die abhängigen Ansprüche und die nachfolgend beschriebenen Merkmale betreffen vorteilhafte Ausführungsformen und Varianten der Erfindung.

Es ist eine Schaltungsanordnung zur Erzeugung einer Wechselspannung vorgesehen, insbesondere zur elektrischen Versorgung eines mit der Schaltungsanordnung verbindbaren elektrischen Verbrauchers (nachfolgend auch als "Primärverbraucher" bezeichnet).

Der Primärverbraucher kann auf beliebige Weise mit der Schaltungsanordnung verbindbar sein. Beispielsweise kann die Schaltungsanordnung Anschlussklemmen aufweisen, um den Primärverbraucher oder eine mit dem Primärverbraucher verbundene elektrische Leitung oder Stromschiene anzuschließen. Die Schaltungsanordnung kann gegebenenfalls auch mechanisch mit dem Primärverbraucher verbindbar sein, beispielsweise mit einem Gehäuseteil des Primärverbrauchers kraftschlüssig, formschlüssig und/oder stoffschlüssig verbunden sein.

Der Primärverbraucher ist vorzugsweise nicht als Komponente der Schaltungsanordnung zu verstehen.

Bei dem Primärverbraucher kann es sich um einen beliebigen elektrischen Verbraucher bis hin zu einer Gruppe aus mehreren elektrischen Verbrauchern handeln. Vorzugsweise handelt es sich bei dem Primärverbraucher um einen Elektromotor, um ein Antriebsaggregat und/oder um zumindest einen elektrischen Verbraucher innerhalb eines Niederspannungsnetzes (insbesondere eines Haushaltsstromnetzes).

Bei der von der Schaltungsanordnung erzeugten Wechselspannung handelt es sich vorzugsweise um eine einphasige Wechselspannung. Es kann aber auch vorgesehen sein, dass die Schaltungsanordnung eine mehrphasige Wechselspannung, insbesondere einen Drehstrom, erzeugt. Die Wechselspannung kann während des Betriebs in Amplitude, Phase und/oder Frequenz einstellbar sein (z. B. um eine Drehzahl eines Elektromotors vorzugeben) oder aber auch konstant sein (z. B. um ein elektrisches Haushaltsgerät zu betreiben).

Erfindungsgemäß umfasst die Schaltungsanordnung zumindest einen modularen Wechselrichter, der als Kaskade aus mehreren Wechselrichtereinheiten ausgebildet ist.

Der zumindest eine Wechselrichter kann also ausgebildet sein, die Wechselspannung zu erzeugen. Hierzu kann der Wechselrichter beispielsweise einen ersten Primärversorgungsanschluss und einen zweiten Primärversorgungsanschluss aufweisen, zwischen denen die Wechselspannung anliegt. Der zu betreibende elektrische Verbraucher bzw. der Primärverbraucher kann dann mit dem ersten Primärversorgungsanschluss und mit dem zweiten Primärversorgungsanschluss verbindbar sein bzw. an den besagten Primärversorgungsanschlüssen anschließbar sein.

Unter einer Kaskade der Wechselrichtereinheiten ist insbesondere eine ausgangsseitige Reihenschaltung der Wechselrichtereinheiten zu verstehen.

Es kann grundsätzlich eine beliebige Anzahl Wechselrichtereinheiten vorgesehen sein, beispielsweise bis zu 10 Wechselrichtereinheiten, bis zu 20 Wechselrichtereinheiten, bis zu 50 Wechselrichtereinheiten, bis zu 100 Wechselrichtereinheiten, bis zu 200 Wechselrichtereinheiten, bis zu 500 Wechselrichtereinheiten oder noch mehr Wechselrichtereinheiten.

Grundsätzlich sei an dieser Stelle erwähnt, dass mitunter auch Wechselrichtereinheiten parallel mit anderen Wechselrichtereinheiten verschaltet sein können, beispielsweise um einen maximal möglichen Ausgangsstrom zu erhöhen.

Erfindungsgemäß weist die Schaltungsanordnung außerdem eine Steuereinrichtung zur Konfiguration der Wechselrichtereinheiten und ein Datenübertragungssystem zur Signalübertragung zwischen der Steuereinrichtung und den Wechselrichtereinheiten auf.

Die Steuereinrichtung kann als Mikroprozessor ausgebildet sein. Anstelle eines Mikroprozessors kann auch eine beliebige weitere Einrichtung zur Implementierung der Steuereinrichtung vorgesehen sein, beispielsweise eine oder mehrere Anordnungen diskreter elektrischer Bauteile auf einer Leiterplatte, eine speicherprogrammierbare Steuerung (SPS), eine anwendungsspezifische integrierte Schaltung (ASIC) oder eine sonstige programmierbare Schaltung, beispielsweise auch ein Field Programmable Gate Array (FPGA), eine programmierbare logische Anordnung (PLA) und/oder ein handelsüblicher Computer. Die Steuereinrichtung kann sich auch als Kombination mehrerer dezentral innerhalb der Schaltungsanordnung verteilt angeordneter elektronischer Bauteile ergeben.

Die Steuereinrichtung kann auch ein Funktionsmodul einer übergeordneten Steuereinheit sein, beispielsweise ein Funktionsmodul des nachfolgend noch genannten Batteriemanagementsystems der Gleichspannungsquellen oder einer Steuereinheit des von der Wechselspannung betriebenen elektrischen Verbrauchers.

Erfindungsgemäß ist jede der Wechselrichtereinheiten mit zumindest einer eigenen Gleichspannungsquelle verbindbar, weist einen Steuereingang sowie einen Datenausgang auf und ist eingerichtet, in Abhängigkeit von über den Steuereingang empfangenen Steuersignalen der Steuereinrichtung die zugeordnete Gleichspannungsquelle ausgangsseitig für die Erzeugung der Wechselspannung verfügbar zu machen (gegebenenfalls wahlweise als +U_{DC} oder -U_{DC}) oder nicht verfügbar zu machen.

Die Verbindung zwischen einer jeweiligen Wechselrichtereinheit und der zumindest einen Gleichspannungsquelle kann beispielsweise über entsprechende Versorgungsleitungen und/oder Stromschienen erfolgen. Es kann aber auch eine unmittelbare Anbindung an die Gleichspannungsquelle(n) vorgesehen sein. Die Schaltungsanordnung kann gegebenenfalls auch mechanisch mit der zumindest einen Gleichspannungsquelle verbindbar sein, beispielsweise mit einem Gehäuseteil der zumindest einen Gleichspannungsquelle (z. B. einem Gehäuseteil einer Batterie) kraftschlüssig, formschlüssig und/oder stoffschlüssig verbunden sein.

Die zumindest eine Gleichspannungsquelle ist vorzugsweise nicht als Komponente der Schaltungsanordnung zu verstehen.

Bei der Gleichspannungsquelle kann es sich insbesondere um eine einzelne Batteriezelle einer Batterie oder um eine Gruppe ("Batteriemodul") aus mehreren miteinander verschalteten Batteriezellen einer Batterie handeln. Bei der Gleichspannungsquelle kann es sich gegebenenfalls aber auch um eine komplette Batterie oder um einen Verbund aus mehreren Batterien handeln.

Unter einer "Batterie" ist vorliegend sowohl ein wieder aufladbarer Speicher zu verstehen (also ein "Akkumulator" / "Akkupack"), dessen einzelne Zellen auch "Sekundärzellen" genannt werden, als auch ein nicht wieder aufladbarer Speicher. Eine Batterie bzw. ein Batteriepack kann gegebenenfalls auch nur eine einzige Batteriezelle aufweisen. Die vorliegende Erfindung ist daher nicht unbedingt auf Batterien mit mehreren zusammengeschalteten Batteriezellen beschränkt zu verstehen. Mit einer Batterie kann im Rahmen der vorliegenden Beschreibung außerdem auch ein Speicher für elektrische Energie gemeint sein, der nicht oder nicht ausschließlich elektrochemisch aufgebaut ist, also zum Beispiel ein Kondensator.

Grundsätzlich kann es sich bei der Gleichspannungsquelle allerdings um eine beliebige Gleichspannungsquelle handeln, also beispielsweise auch um eine von einer elektronischen Baugruppe bereitgestellte Gleichspannung, beispielsweise um eine ausgangsseitig von einem Gleichrichter und/oder Gleichstromsteller bereitgestellte Gleichspannung. Die Gleichspannungsquellen werden nachfolgend und vorstehend zur Vereinfachung im Wesentlichen als Batteriezellen einer gemeinsamen Batterie bezeichnet, was jedoch nicht einschränkend, sondern nur beispielhaft zu verstehend ist.

Erfindungsgemäß können die einzelnen Gleichspannungsquellen, also z. B. einzelne Batteriezellen, über die einzelnen Wechselrichtereinheiten bedarfsweise in Reihe geschaltet werden. Die oszillierende Ausgangsspannung des Wechselrichters kann somit durch kleinstufige, treppenförmig aufsummierte Einzelspannungen der einzelnen Gleichspannungsquellen erzeugt werden. Die Höhe der kleinsten Spannungsstufe kann dabei der Ausgangsspannung der jeweiligen Gleichspannungsquelle (z. B. der Zellspannung einer Batteriezelle, wie 3,7 V) entsprechen.

Durch die kaskadierten Wechselrichtereinheiten können die ansonsten erforderlichen, hohen Taktfrequenzen einer pulsweitenmodulierten Ausgangsspannung und die damit einhergehenden Schaltverluste stark reduziert werden.

Auf vorteilhafte Weise können außerdem Gleichspannungsquellen unterschiedlichen Alters bzw. Zustands und unterschiedlichen Typs in demselben Energieversorgungssystem eingesetzt werden, da diese flexibel kombinierbar sein können. Durch die hohe Flexibilität kann außerdem die Nutzungsdauer, beispielsweise eines Batterieblocks eines Photovoltaik-Heimspeichers oder eines Hochvoltspeichers eines Elektrofahrzeugs, erheblich verlängert werden.

Erfindungsgemäß weist das Datenübertragungssystem eine mit der Steuereinrichtung verbundene Steuerleitung und zumindest eine mit der Steuereinrichtung verbundene Datenleitung auf. Die Steuerleitung ist mit den Steuereingängen der Wechselrichtereinheiten und die zumindest eine Datenleitung mit den Datenausgängen der Wechselrichtereinheiten verbunden. Die Wechselrichtereinheiten sind eingerichtet, über die zumindest eine Datenleitung Zustandsinformationen betreffend die jeweils zugeordnete Gleichspannungsquelle an die Steuereinrichtung zu übertragen. Die Steuereinrichtung ist hingegen eingerichtet, die Steuersignale zur Konfiguration der Wechselrichtereinheiten in Abhängigkeit der empfangenen Zustandsinformationen zu übertragen.

Über die Steuerleitung können somit Informationen und Steuersignale von der Steuereinrichtung zu allen Wechselrichtereinheiten gleichzeitig übertragen werden. Dabei können alle notwendigen Informationen für die Steuerung zur Erzeugung der Wechselspannung von der Steuereinrichtung zusammengefasst und als Datenblock zu den Wechselrichtereinheiten gesendet werden. Die Datenübertragung von den Wechselrichtereinheiten zu der Steuereinrichtung kann hingegen über die zumindest eine Datenleitung erfolgen, wobei über die zumindest eine Datenleitung vorzugsweise zu einem bestimmten Zeitpunkt nur eine Wechselrichtereinheit Daten überträgt, vorzugsweise nur auf Anfrage der Steuereinrichtung.

Bei den vorstehend genannten Zustandsinformationen kann es sich insbesondere um Informationen zum aktuellen Ladezustand, zur aktuellen Temperatur und/oder zum aktuellen "Gesundheitszustand" der Gleichspannungsquelle handeln.

Die Gleichspannungsquellen können jeweils ein Steuermodul oder ein gemeinsames Steuermodul aufweisen, das die Zustandsinformationen zu den einzelnen Gleichspannungsquellen erhebt, beispielsweise unter Verwendung geeigneter Sensoren (Temperatursensoren, Strom- und/oder Spannungsmesser etc.) und/oder das die Zustandsinformationen aus einer separaten elektrischen Schaltung ausliest. Das zumindest eine Steuermodul kann die entsprechenden Zustandsinformationen der Wechselrichtereinheit zur Weiterverarbeitung und/oder Übertragung an die Steuereinrichtung übermitteln. Bei dem Steuermodul kann es sich insbesondere um ein Batteriemanagementsystem einer Batterie handeln. Ein Batteriemanagementsystem kann der Überwachung und/oder Regelung der Batterie dienen (teilweise auch als "Power-Management-System" (PMS) bezeichnet) und kann in analoger und/oder digitaler Weise Informationen über den aktuellen Zustand (beispielsweise Ladezustand und/oder Temperaturstatus) und/oder Bauart bzw. charakteristische Parameter (z. B. Nennspannung, Ladeschlussspannung und/oder Identifikationsdaten) der jeweiligen Batterie sowie deren Batteriezellen übertragen.

Die Steuerleitung ist vorzugsweise zur unidirektionalen Signalübertragung von der Steuereinrichtung zu den Wechselrichtereinheiten und die zumindest eine Datenleitung zur unidirektionalen Datenübertragung von den einzelnen Wechselrichtereinheiten zu der Steuereinrichtung vorgesehen.

Insgesamt kann durch die beiden (unidirektionalen) Übertragungswege, also die Steuerleitung einerseits und die zumindest eine Datenleitung andererseits, eine vorteilhafte bidirektionale Signal- und Datenübertragung bereitgestellt werden.

Durch das vorgeschlagene Datenübertragungssystem kann eine schnelle Datenübertragung bereits mit wenigen elektrischen Leitungen zwischen den Kommunikationspartnern bereitgestellt werden.

Schließlich wird mit dem Datenübertragungssystem ein vorteilhaftes Datenbussystem vorgeschlagen, in dem die Steuereinrichtung als Master und die Wechselrichtereinheiten als Slaves ausgebildet sein können. Aus dem Stand der Technik sind zwar verschiedene Datenbussysteme bekannt, wie beispielsweise SPI-Busse ("Serial Peripheral Interface") oder CAN-Busse ("Controller Area Network"). Keines der bekannten Datenbussysteme eignet sich allerdings ohne Weiteres für die vorliegende Verwendung als Datenübertragungssystem zwischen der vorliegenden Steuereinrichtung und den Wechselrichtereinheiten für die Erzeugung einer Wechselspannung mit besonders hoher Qualität, insbesondere da vorliegend eine äußerst genaue Synchronisierung der einzelnen Wechselrichtereinheiten bzw. Slaves mit der Steuereinrichtung bzw. dem Master erforderlich sein kann.

Die Steuereinrichtung und/oder die Wechselrichtereinheiten können jeweilige Datenverarbeitungsmodule aufweisen, die die Kommunikation, Weiterverarbeitung von Daten und Signalen und insbesondere die Konfiguration der Wechselrichtereinheiten (beispielsweise die Zu- und/oder Abschaltung der Gleichspannungsquellen) koordinieren bzw. veranlassen.

Es kann vorgesehen sein, dass der Wechselrichter bzw. dessen Wechselrichtereinheiten eingerichtet sind, um nach Vorgabe der Steuereinrichtung Amplituden, Phasen und/oder Frequenzen ausgangsseitig für die Bereitstellung der Wechselspannung einzustellen. Der Wechselrichter bzw. dessen Wechselrichtereinheiten können somit nach Vorgabe der Steuereinrichtung flexibel konfigurierbar sein, beispielsweise um das Betriebsverhalten eines Primärverbrauchers vorzugeben, zu steuern und/oder zu regeln.

In einer Ausgestaltung der Erfindung kann insbesondere vorgesehen sein, dass die Wechselrichtereinheiten jeweils eine H-Brückenschaltung aus vier von der Steuereinrichtung konfigurierbaren, leistungselektronischen Schaltelementen aufweisen. Zu einem Ausführungsbeispiel einer derartigen H-Brückenschaltung sei auf die DE 10 2018 003 642 A1 verwiesen, deren Offenbarungsgehalt durch diese Bezugnahme vollständig in die vorliegende Beschreibung aufgenommen sei.

Beispielsweise können jeweils zwei der genannten leistungselektronischen Schaltelemente mit ihren Ausgängen zu einer Reihenschaltung verbunden sein und jeweils einen gemeinsamen Verbindungszweig der H-Brückenschaltung ausbilden. Es können zwei derartige Verbindungszweige vorgesehen sein. In beiden Verbindungszweigen kann zwischen den leistungselektronischen Schaltelementen jeweils ein Ausgang der Wechselrichtereinheit angeschlossen sein. Die jeweiligen Enden der Verbindungszweige können miteinander verbunden sein, wobei an jedem Ende ein Eingang der Wechselrichtereinheit angeschlossen ist; die beiden Verbindungszweige können somit parallelgeschaltet sein. Die Ausgangsspannung einer jeden Wechselrichtereinheit kann in Abhängigkeit der Beschaltung der H-Brücke vorzugsweise einen von drei Spannungswerten annehmen (0, ±U_{DC}).

Es kann vorgesehen sein, dass die konfigurierbaren leistungselektronischen Schaltelemente als Bipolartransistoren oder vorzugsweise als MOSFETs ausgebildet sind. Es können grundsätzlich aber beliebige Schaltelemente, insbesondere Halbleiterbauelemente, zum Einsatz kommen. Die konfigurierbaren leistungselektronischen Schaltelemente können auch als Relais ausgebildet sein. Die Bauart der konfigurierbaren leistungselektronischen Schaltelemente ist grundsätzlich nicht einschränkend für die Erfindung.

In einer vorteilhaften Weiterbildung der Erfindung kann vorgesehen sein, dass die Steuereinrichtung eingerichtet ist, die Wechselspannung durch Konfiguration, insbesondere zyklische Konfiguration, der Wechselrichtereinheiten über die Steuerleitung aus den Einzelspannungen der Gleichspannungsquellen zu erzeugen (vorzugsweise stufenförmig oder zumindest annähernd stufenförmig).

Die Steuereinrichtung kann weiter eingerichtet sein, die Wechselrichtereinheiten in Abhängigkeit eines als Zustandsinformation an die Steuereinrichtung übermittelten jeweiligen Ladezustands der entsprechenden Gleichspannungsquelle mit dem Ziel eines Ladungsausgleichs zwischen den Gleichspannungsquellen unterschiedlich zu belasten.

Da die einzelnen Gleichspannungsquellen jeweils über eine separate Wechselrichtereinheit zu- oder abgeschaltet werden können, ist ein Ladungsausgleich zwischen den Gleichspannungsquellen, also beispielsweise zwischen mehreren Batteriezellen, möglich.

Beispielsweise kann vorgesehen sein, Gleichspannungsquellen mit einem höheren Ladezustand als andere Gleichspannungsquellen häufiger und/oder länger in die Erzeugung der Wechselspannung einzubeziehen als die anderen Gleichspannungsquellen, wodurch sich die Ladezustände aller Gleichspannungsquellen über die Zeit aneinander angleichen.

Gemäß einer Weiterbildung der Erfindung kann die Steuereinrichtung außerdem auch eingerichtet sein, die Wechselrichtereinheiten in Abhängigkeit eines als Zustandsinformation an die Steuereinrichtung übermittelten jeweiligen Ladezustands, Temperaturzustands und/oder Fehlerzustands der entsprechenden Gleichspannungsquelle von der Erzeugung der Wechselspannung zumindest vorübergehend bzw. zeitweise auszuschließen.

Beispielsweise können fehlerhafte oder überhitzte Gleichspannungsquellen ausgeschlossen werden. Insbesondere können auch tiefentladene Batteriezellen ausgeschlossen werden.

Beispielsweise kann der Wechselrichter bei einem dauerhaften oder vorübergehenden Ausfall von Gleichspannungsquellen mit den noch funktionsbereiten Gleichspannungsquellen weiterbetrieben werden. Die Verfügbarkeit eines entsprechenden Energieversorgungssystems kann hierdurch viel höher sein als bei der konventionellen Technik einer direkten und naturgemäß unflexiblen Reihenschaltung der Gleichspannungsquellen.

Defekte Gleichspannungsquellen, beispielsweise defekte Batteriezellen, können ausgeschaltet und überbrückt werden. Dadurch ist nicht zuletzt auch die Möglichkeit gegeben, diese Gleichspannungsquellen sogar während des Betriebs sicher auszuwechseln.

Gemäß einer Weiterbildung der Erfindung kann vorgesehen sein, dass die Wechselrichtereinheiten eingerichtet sind, die Zustandsinformationen nur auf Anforderung der Steuereinrichtung zu übertragen.

Die Steuereinrichtung kann eingerichtet sein, die Zustandsinformationen einer jeweiligen Wechselrichtereinheit durch Übertragung eines der entsprechenden Wechselrichtereinheit zugeordneten, eindeutigen Identifikators anzufordern, insbesondere über die Steuerleitung anzufordern (gegebenenfalls aber auch über eine weitere Leitung, beispielsweise die nachfolgend noch genannte Synchronisationsleitung oder sogar über einen kabellosen Kommunikationskanal).

In einer Weiterbildung der Erfindung kann vorgesehen sein, dass die Wechselrichtereinheiten jeweils ein Ausgangsschaltelement aufweisen, das über den Datenausgang mit der Datenleitung verbunden ist, und das den Datenausgang in einen hochohmigen Zustand zu verbringen vermag, wenn die entsprechende Wechselrichtereinheit keine Zustandsinformation überträgt.

Durch das Ausgangsschaltelement können Konflikte logischer bzw. binärer Zustände ("0" / "1") auf der Datenleitung besonders einfach vermieden werden. Beispielsweise können Ausgangsschaltelemente vorgesehen sein, die auf den bekannten Ausgangsbeschaltungen "Open-Collector", "Open-Drain" oder "Tri-State" beruhen.

In einer vorteilhaften Weiterbildung der Erfindung kann vorgesehen sein, dass das Datenübertragungssystem außerdem eine mit der Steuereinrichtung und allen Wechselrichtereinheiten verbundene Taktgeberleitung aufweist.

Vorzugsweise ist die Steuereinrichtung eingerichtet, ein Taktsignal zur Synchronisierung der Signalübertragung zwischen der Steuereinrichtung und den Wechselrichtereinheiten auf der Taktgeberleitung zu erzeugen. Grundsätzlich muss das Taktsignal aber nicht unbedingt von der Steuereinrichtung, sondern kann auch von einer sonstigen elektrischen Einheit oder Baugruppe erzeugt werden, beispielsweise von einer der Wechselrichtereinheiten.

An dieser Stelle sei erwähnt, dass eine Taktgeberleitung bzw. ein Taktsignal zur Synchronisierung der Signalübertragung zwischen der Steuereinrichtung und den Wechselrichtereinheiten nicht unbedingt erforderlich ist. Grundsätzlich lässt sich die Kommunikation auch asynchron realisieren. Auch ein Taktrückgewinnungsverfahren ("Clock Recovery") kann vorgesehen sein.

Die Verwendung einer Taktgeberleitung mit einem entsprechenden Taktsignal ist besonders bevorzugt, da hierdurch die Übertragungsgeschwindigkeit und Zuverlässigkeit der Daten- und Signalübertragung erhöht sein kann. Insbesondere durch Verwendung eines Taktsignals kann eine Taktung mit Frequenzen oberhalb von 1 MHz realisierbar sein.

In einer vorteilhaften Weiterbildung der Erfindung kann vorgesehen sein, dass das Datenübertragungssystem außerdem eine mit der Steuereinrichtung und mit allen Wechselrichtereinheiten verbundene Synchronisationsleitung aufweist.

Die Steuereinrichtung kann eingerichtet sein, ein Synchronisationssignal auf der Synchronisationsleitung zu erzeugen. Grundsätzlich muss das Synchronisationssignal aber nicht unbedingt von der Steuereinrichtung, sondern kann auch von einer sonstigen elektrischen Einheit oder Baugruppe erzeugt werden, beispielsweise von einer der Wechselrichtereinheiten.

Mit dem Synchronisationssignal kann die genaue Synchronisation aller Wechselrichtereinheiten ermöglicht werden, zur Erzeugung der Wechselspannung mit besonders hoher Güte bzw. Annäherung an eine sinusförmige Spannung mit besonders niedrigen Oberschwingungen.

Die Wechselrichtereinheiten können daher eingerichtet sein, einen Umschaltzeitpunkt, zu dem im Rahmen der Erzeugung der Wechselspannung eine ausgangsseitige Spannungsänderung der jeweiligen Wechselrichtereinheit erfolgt, mit dem Empfang des Synchronisationssignals zu synchronisieren bzw. von dem Zeitpunkt des Empfangs des Synchronisationssignals direkt abhängig zu machen.

Mittels des Synchronisationssignals können optional außerdem der Anfang und das Ende eines von der Steuereinrichtung an die Wechselrichtereinheiten mittels der Steuerleitung übertragenen Datenblocks gekennzeichnet werden.

Ferner können die Wechselrichtereinheiten optional eingerichtet sein, angefragte Datenpakete synchronisiert mit dem Synchronisationssignal auf der Datenleitung zu übertragen.

Vorzugsweise weist das Datenübertragungssystem neben der Steuerleitung und der zumindest einen Datenleitung die Taktleitung und die Synchronisationsleitung auf. Es können somit vorzugsweise zumindest vier Leitungen realisiert sein.

In einer Weiterbildung der Erfindung kann vorgesehen sein, dass die Steuereinrichtung und die Wechselrichtereinheiten jeweilige Potentialtrennelemente aufweisen, um die Signalübertragung über die Steuerleitung, die zumindest eine Datenleitung, die Taktgeberleitung und/oder die Synchronisationsleitung isoliert und ausgehend von verschiedenen Spannungspegeln zu ermöglichen.

Wegen der in der Regel unterschiedlichen Spannungspotentiale der einzelnen Gleichspannungsquellen (mitunter können sich die Spannungspotentiale um über einhundert Volt unterscheiden), kann es von Vorteil sein, das Datenübertragungssystem isoliert und insbesondere mit einer hohen Isolationsspannung auszuführen.

Die Potentialtrennung kann außerdem die Störfestigkeit gegenüber induktiven und kapazitiven Kopplungen deutlich verbessern, insbesondere wenn potentialfreie Leitungen mit zweifacher Potentialtrennung verwendet werden (also auf beiden Seiten bzw. an allen Anschlussstellen der jeweiligen Leitung).

Durch die Potentialtrennelemente kann eine galvanische Trennung bewirkt werden, die den Stromfluss zwischen den Leitungsenden blockiert und gleichzeitig den ungehinderten Datendurchgang ermöglicht. Die vorgeschlagene elektrische Isolierung kann insbesondere zum Schutz vor Spannungen oder Strömen vorteilhaft sein, die durch Überspannungen oder Erdschleifen verursacht werden, insbesondere da Systemerdungen, die durch besonders lange Leitungen getrennt sind, mitunter nicht dasselbe Potential aufweisen, so dass Erdströme zwischen den Leitungsenden fließen können, die die Signalqualität negativ beeinflussen können. Durch die vorgeschlagene Isolierung wird daher die Datenübertragung weiter verbessert.

Bei den Potentialtrennelementen handelt es sich vorzugsweise um digitale Isolatoren, um Transformatoren, um Koppelkondensatoren und/oder um Optokoppler.

Erfindungsgemäß ist vorgesehen, dass mehrere der Wechselrichtereinheiten zu einer gemeinsamen Modulgruppe zusammengefasst sind.

Vorzugsweise weist die Schaltungsanordnung mehrere der besagten Modulgruppen auf, beispielsweise zumindest zwei Modulgruppen, vorzugsweise bis zu 5 Modulgruppen oder mehr Modulgruppen, beispielsweise bis zu 10 Modulgruppen, bis zu 20 Modulgruppen, bis zu 50 Modulgruppen, bis zu 100 Modulgruppen, bis zu 200 Modulgruppen, bis zu 500 Modulgruppen oder noch mehr Modulgruppen.

Es kann vorgesehen sein, dass jede der Modulgruppen dieselbe Anzahl Wechselrichtereinheiten aufweist. Dies ist allerdings nicht unbedingt erforderlich. Beispielsweise können die Modulgruppen jeweils genau 2 Wechselrichtereinheiten, jeweils bis zu 5 Wechselrichtereinheiten, jeweils bis zu 10 Wechselrichtereinheiten, jeweils bis zu 20 Wechselrichtereinheiten, jeweils bis zu 50 Wechselrichtereinheiten, jeweils bis zu 100 Wechselrichtereinheiten, jeweils bis zu 200 Wechselrichtereinheiten, jeweils bis zu 500 Wechselrichtereinheiten oder jeweils noch mehr Wechselrichtereinheiten aufweisen.

Erfindungsgemäß weist jede der genannten Modulgruppen einen mit allen Steuereingängen der Wechselrichtereinheiten der Modulgruppe verbundenen Modulsteuereingang und einen mit allen Datenausgängen der Wechselrichtereinheiten der Modulgruppe verbundenen Moduldatenausgang auf.

Die Bildung von Modulgruppen aus mehreren Wechselrichtereinheiten kann von Vorteil sein, um die Leitungslängen innerhalb des Datenübertragungssystems zu reduzieren. Innerhalb einer Modulgruppe können die Leitungslängen vergleichsweise gering sein. Da große Leitungslängen insbesondere mit hohen Leitungskapazitäten einhergehen, kann eine Verringerung der Leitungslängen die Übertragungsrate des Datenübertragungssystems erhöhen. Dies ist insbesondere - aber nicht ausschließlich - bezüglich der Datenleitung von Vorteil, wenn die Wechselrichtereinheiten die vorstehend genannten Ausgangsschaltelemente aufweisen.

Erfindungsgemäß weist das Datenübertragungssystem genau eine Datenleitung für jede der Modulgruppen auf.

Die Steuereinrichtung weist ein logisches Eingangsgatter auf, vorzugsweise ein ODER-Gatter, das eingangsseitig mit den einzelnen Datenleitungen der Modulgruppen verbunden ist und ausgangsseitig eine einzige, kombinierte Datenleitung für die Weiterverarbeitung innerhalb der Steuereinrichtung bereitstellt.

Durch das Eingangsgatter können somit die zunächst parallel geführten Datenleitungen in der Steuereinrichtung wieder zusammengefasst werden.

Erfindungsgemäß weist jede der Modulgruppen ein logisches Ausgangsgatter auf, vorzugsweise ein ODER-Gatter, das eingangsseitig mit den einzelnen Datenausgängen der Wechselrichtereinheiten der Modulgruppe und ausgangsseitig mit dem Moduldatenausgang der Modulgruppe verbunden ist.

Auf diese Weise kann die Übertragungsrate bei der Kommunikation zwischen den Wechselrichtereinheiten und der Steuereinrichtung weiter erhöht werden.

Um den Einfluss des Laststroms zu verringern, können gemäß einer Ausgestaltung der Erfindung optional auch Buffer in den Leitungen bzw. zwischen den Leitungen und den Ein- und Ausgängen der Wechselrichtereinheiten und der Steuereinrichtung vorgesehen sein. Die Buffer sind jedoch nicht zwingend erforderlich und stellen nur eine weitere Möglichkeit zur Verbesserung des Datenübertragungssystems dar.

In einer Weiterbildung der Erfindung kann vorgesehen sein, dass der modulare Wechselrichter zumindest zwei Wechselrichtermodule aufweist, wobei die Wechselrichtereinheiten des Wechselrichters gleichmäßig auf die zumindest zwei Wechselrichtermodule verteilt sind, und wobei die Wechselrichtermodule zu einer Reihenschaltung verbunden sind, um gemeinsam die Wechselspannung zwischen den Primärversorgungsanschlüssen für den mit der Schaltungsanordnung verbindbaren Primärverbraucher zu erzeugen.

Es kann insbesondere vorgesehen sein, dass jedes Wechselrichtermodul jeweils einen ersten Versorgungsausgang und einen zweiten Versorgungsausgang aufweist. Um die Wechselrichtermodule zu der besagten Reihenschaltung zu verbinden, kann vorzugsweise der zweite Versorgungsausgang des ersten Wechselrichtermoduls mit dem ersten Versorgungsausgang des zweiten Wechselrichtermoduls verbunden sein, wobei zwischen dem ersten Versorgungsausgang des ersten Wechselrichtermoduls und dem zweiten Versorgungsausgang des zweiten Wechselrichtermoduls schließlich die Wechselspannung zur elektrischen Versorgung des Primärverbrauchers anliegen kann.

Bei vielen elektrischen Verbraucheranordnungen sind neben einem Primärverbraucher auch noch einer oder mehrere Nebenverbraucher vorhanden. Beispielsweise müssen bei Elektroautos neben den als Primärverbraucher anzusehenden Antriebsmotoren noch Nebenverbraucher wie eine Klimaanlage, Scheinwerfer, ein Entertainmentsystem bzw. Radio etc. elektrisch versorgt werden. Die Stromversorgung derartiger Nebenverbraucher erfolgt meistens mit einer Sekundärspannung, die niedriger ist als die Betriebswechselspannung - bei Elektroautos häufig mit einer Gleichspannung von 12 Volt oder 48 Volt. Die Bereitstellung der Sekundärspannung neben der Betriebswechselspannung ist vergleichsweise aufwändig.

Gemäß einer Ausgestaltung der Erfindung kann zwischen den Wechselrichtermodulen optional ein Sekundärversorgungsanschluss angeordnet sein. Die Steuereinrichtung kann schließlich eingerichtet sein, die Wechselrichtereinheiten der Wechselrichtermodule derart zu konfigurieren, dass sich eine Sekundärspannung zwischen dem Sekundärversorgungsanschluss und einem der Primärversorgungsanschlüsse zur Versorgung eines mit der Schaltungsanordnung verbindbaren Nebenverbrauchers ergibt.

Vorzugsweise kann die Steuereinrichtung eingerichtet sein, die Sekundärspannung durch entsprechende Konfiguration der Wechselrichtermodule bzw. deren Wechselrichtereinheiten unabhängig von der für den Primärverbraucher erzeugten Wechselspannung einzustellen.

Bei dem Nebenverbraucher kann es sich grundsätzlich um einen beliebigen elektrischen Verbraucher oder um eine Gruppe elektrischer Verbraucher handeln. Der Nebenverbraucher ist vorzugsweise ein von dem Primärverbraucher unabhängig betreibbarer elektrischer Verbraucher.

Der Nebenverbraucher kann auf beliebige Weise mit dem Sekundärversorgungsanschluss und zumindest einem der Primärversorgungsanschlüsse verbindbar sein. Beispielsweise kann der Nebenverbraucher unmittelbar an den genannten Versorgungsanschlüssen angeschlossen oder über eine mit dem Nebenverbraucher verbundene elektrische Leitung oder Stromschiene an den Versorgungsanschlüssen angeschlossen sein. Die Schaltungsanordnung kann gegebenenfalls auch mechanisch mit dem Nebenverbraucher verbindbar sein, beispielsweise mit einem Gehäuseteil des Nebenverbraucher kraftschlüssig, formschlüssig und/oder stoffschlüssig verbunden sein.

Der Nebenverbraucher ist vorzugsweise nicht als Komponente der Schaltungsanordnung zu verstehen.

Bei dem Nebenverbraucher handelt es sich vorzugsweise um einen mit einer Gleichspannung betreibbaren elektrischen Verbraucher, vorzugsweise um einen Nebenverbraucher eines Elektrofahrzeugs, insbesondere eines Elektroautos, wie beispielsweise eine Klimaanlage, Scheinwerfer oder ein Entertainmentsystem.

Bei der Sekundärspannung handelt es sich vorzugsweise um eine elektrische Spannung mit niedrigerer Amplitude als die der Wechselspannung zur Versorgung des Primärverbrauchers.

Durch die vorgeschlagene Schaltungsanordnung ist es möglich, die Sekundärspannung für die Versorgung des Nebenverbrauchers unabhängig von der Wechselspannung des Primärverbrauchers zu erzeugen. Dies ist vorteilhaft, da die Wechselspannung des Primärverbrauchers häufig von dem aktuellen Betriebszustand des Primärverbrauchers abhängt - bei einem Elektromotor eines Elektrofahrzeugs beispielsweise von der Fahrgeschwindigkeit. Durch die vorgeschlagene Ausgestaltung der Schaltungsanordnung kann selbst bei niedrigen Amplituden der Wechselspannung und/oder bei niedrigen Frequenzen der Wechselspannung nach wie vor eine verlässliche Versorgung des Nebenverbrauchers sichergestellt werden. So kann beispielsweise ein Nebenverbraucher eines Elektrofahrzeugs von der vorgeschlagenen Schaltungsanordnung selbst bei sehr niedrigen Fahrgeschwindigkeiten oder im Stillstand des Elektrofahrzeugs noch verlässlich von der Sekundärspannung betreibbar sein.

Gemäß einer Ausgestaltung der Erfindung kann vorgesehen sein, dass die Schaltungsanordnung einen zweiten Wechselrichter aufweist, mit einem dritten Primärversorgungsanschluss und einem vierten Primärversorgungsanschluss, zwischen denen eine zweite Wechselspannung zur elektrischen Versorgung des Primärverbrauchers anliegt.

Vorzugsweise ist dabei der dritte Primärversorgungsanschluss des zweiten Wechselrichters mit dem zweiten Primärversorgungsanschluss des zuvor genannten, ersten Wechselrichters verbunden. Die Wechselrichter können also in einer Reihenschaltung verbunden sein.

Der Primärverbraucher kann dadurch insbesondere dreiphasig betreibbar sein, indem der Primärverbraucher mit dem ersten Primärversorgungsanschluss, dem mit dem dritten Primärversorgungsanschluss verbundenen, zweiten Primärversorgungsanschluss und dem vierten Primärversorgungsanschluss verbunden ist bzw. an besagten Versorgungsanschlüssen angeschlossen ist.

Grundsätzlich kann der zweite Wechselrichter beliebig ausgebildet sein. Der zweite Wechselrichter muss daher auch nicht unbedingt konfigurierbar sein. Vorzugsweise weist der zweite Wechselrichter allerdings denselben Aufbau auf wie der zuvor genannte, erste Wechselrichter. Merkmale sowie Vorteile, die vorstehend und nachfolgend für einen der Wechselrichter beschrieben werden, können auch auf den jeweils anderen Wechselrichter übertragbar sein. Dies gilt grundsätzlich auch für die Wechselrichtermodule der Wechselrichter und die Wechselrichtereinheiten der Wechselrichtermodule.

Es kann vorzugsweise eine symmetrische, dreiphasige Drehspannung zur elektrischen Versorgung des Primärverbrauchers zwischen den Primärversorgungsanschlüssen der Wechselrichter bereitgestellt werden.

In einer Ausgestaltung der Erfindung kann vorgesehen sein, dass die Schaltungsanordnung einen Gleichrichter zur Bereitstellung einer Gleichspannung zur elektrischen Versorgung des Nebenverbrauchers aufweist. Grundsätzlich kann der Nebenverbraucher aber auch unmittelbar mit einer Wechselspannung betreibbar sein - je nach Anwendung bzw. Art des Nebenverbrauchers. Vorzugsweise wird der Nebenverbraucher aber mit der besagten Gleichspannung versorgt, beispielsweise mit einer Gleichspannung zwischen 12 Volt und 48 Volt. Der Gleichrichter kann eingangsseitig mit dem ersten Primärversorgungsanschluss, dem zweiten Primärversorgungsanschluss, dem vierten Primärversorgungsanschluss, dem Sekundärversorgungsanschluss und/oder einem Sekundärversorgungsanschluss eines der Wechselrichter verbunden sein, um aus einer oder mehreren der sich zwischen den genannten eingangsseitig verbundenen Versorgungsanschlüssen ergebenden Potentialdifferenzen die Gleichspannung zu erzeugen.

Es kann vorgesehen sein, dass der Gleichrichter eine elektronische Ventilanordnung aufweist oder als Ventilanordnung ausgebildet ist, wobei die Ventilanordnung mit den eingangsseitig angeschlossenen Versorgungsanschlüssen verbunden ist. Durch die elektronische Ventilanordnung kann sichergestellt werden, dass stets die größte sich ergebende Potentialdifferenz zwischen den Versorgungsanschlüssen ausgangsseitig zur Versorgung des Nebenverbrauchers verfügbar ist. Insbesondere können Dioden zur Ausbildung der elektronischen Ventilanordnung vorgesehen sein. Die Verwendung einer Diode als Ventilelement ist aber lediglich beispielhaft und nicht einschränkend zu verstehen. Als Alternative kann zum Beispiel auch ein auf Thyristoren basierender Gleichrichter oder ein Gleichrichter sonstiger Bauweise vorgesehen sein.

Schließlich kann vorgesehen sein, dass die Steuereinrichtung eingerichtet ist, die Wechselrichtereinheiten stets derart zu konfigurieren, dass einerseits die Wechselspannung(en) zur elektrischen Versorgung des Primärverbrauchers bereitgestellt wird/werden, und andererseits die elektrische Potentialdifferenz zwischen zumindest zwei der Versorgungsanschlüsse größer ist als eine zum Betrieb des Nebenverbrauchers erforderliche elektrische Spannung. Wenn möglichst viele der genannten Potentialdifferenzen bereits für sich genommen ausreichend groß sind um den Nebenverbraucher zu betreiben, kann ein aktiver Ladungsausgleich zwischen den Gleichspannungsquellen (z. B. Batteriezellen) besonders einfach erfolgen.

In einer Ausgestaltung der Erfindung kann außerdem vorgesehen sein, dass die Schaltungsanordnung einen Gleichstromsteller aufweist, der eingangsseitig mit der ausgangsseitigen Gleichspannung des Gleichrichters verbunden ist, und der ausgangsseitig eine Betriebsnennspannung für den Betrieb des Nebenverbrauchers bereitstellt. Mit Hilfe des Gleichstromstellers kann eine geregelte Gleichspannung erzeugt und dem oder den Nebenverbrauchern zur Verfügung gestellt werden. Die Verwendung eines Gleichstromstellers ist allerdings nicht unbedingt erforderlich, insbesondere wenn der Nebenverbraucher auch mit einer ungeregelten Gleichspannung betreibbar ist oder wenn die Sekundärspannung bereits von der Steuereinrichtung geregelt werden kann.

Die Erfindung betrifft auch ein Energieversorgungssystem, aufweisend eine Schaltungsanordnung gemäß den vorstehenden und nachfolgenden Ausführungen und die Gleichspannungsquellen.

Eine besonders vorteilhafte Anwendung des vorgeschlagenen Energieversorgungssystems betrifft die elektrische Versorgung von Primärverbrauchern eines Niederspannungsnetzes oder eines Elektrofahrzeugs.

Insbesondere kann vorgesehen sein, dass das Energieversorgungssystem eine Energiespeicherbaugruppe mit den einzelnen Gleichspannungsquellen aufweist. Die Gleichspannungsquellen können allerdings auch jeweils voneinander unabhängig sein und müssen nicht zwingend in einer gemeinsamen Energiespeicherbaugruppe enthalten sein.

Insbesondere kann vorgesehen sein, dass die Energiespeicherbaugruppe eine Batterie aufweist oder als Batterie ausgebildet ist, wobei die einzelnen Gleichspannungsquellen als Batteriezellen der Batterie ausgebildet sind.

Auf vorteilhafte Weise kann durch die modulare Erzeugung der Wechselspannung optional eine aktive Ladezustandssteuerung und/oder ein Thermomanagement bereitgestellt werden, indem einzelne Batteriezellen oder Batteriemodule nach Vorgabe der Steuereinrichtung, unter Berücksichtigung aktueller Ladezustände und/oder Temperaturdaten, in die Erzeugung der Wechselspannung einbezogen werden oder zumindest zeitweise deaktiviert werden.

Die Erfindung betrifft auch eine elektrische Verbraucheranordnung, insbesondere ein Elektrofahrzeug oder ein Haushaltsstromnetz, aufweisend ein Energieversorgungssystem gemäß den vorstehenden und nachfolgenden Ausführungen und zumindest einen Primärverbraucher, der mit der Wechselspannung betrieben wird.

Grundsätzlich kann es sich bei der elektrischen Verbraucheranordnung um eine beliebige Verbraucheranordnung handeln, die zumindest einen mit der Wechselspannung betreibbaren Primärverbraucher aufweist. Beispielsweise kann es sich bei der Verbraucheranordnung um ein mit elektrischer Energie zu versorgendes Gebäude handeln. Die Erfindung eignet sich insbesondere zur elektrischen Versorgung von Haushalten oder Industrieanlagen mit einer Solarbatterie.

Die Erfindung betrifft auch ein Verfahren zur Erzeugung einer Wechselspannung gemäß Anspruch 12.

Durch das vorgeschlagene Verfahren lässt sich eine näherungsweise sinusförmige Wechselspannung mit sehr niedrigen Oberschwingungen aus der Addition der einzelnen Gleichspannungen der Gleichspannungsquellen erzeugen, insbesondere aufgrund der vorgeschlagenen Signalübertragungstechnik zur schnellen und dennoch einfachen Ansteuerung des modularen Wechselrichters.

Die Erfindung eignet sich unter anderem vorteilhaft für die Versorgung von Elektromotoren oder Stromnetzen mit Batterien als Energiespeicher.

Der vorgeschlagene modulare Wechselrichter kann auch für die Aufladung der Batterien durch eine externe Gleichstrom- oder Wechselstromversorgung eingesetzt werden.

Merkmale, die im Zusammenhang mit einem der Gegenstände der Erfindung, namentlich gegeben durch die Schaltungsanordnung, das Energieversorgungssystem, die Verbraucheranordnung und das Verfahren, beschrieben wurden, sind auch für die anderen Gegenstände der Erfindung vorteilhaft umsetzbar. Ebenso können Vorteile, die im Zusammenhang mit einem der Gegenstände der Erfindung genannt wurden, auch auf die anderen Gegenstände der Erfindung bezogen verstanden werden.

An dieser Stelle sei darauf hingewiesen, dass der in der vorliegenden Beschreibung und in den Patentansprüchen verwendete Begriff "verbunden" bzw. "Verbindung" eine unmittelbare elektrische Verbindung der genannten Komponenten, aber auch eine mittelbare elektrische Verbindung der genannten Komponenten (also z. B. über weitere elektrische Leitungen oder elektronische Bauteile wie Widerstände, Induktivitäten und/oder Kapazitäten etc.) beschreiben kann. Der Begriffe "angeschlossen" deutet hingegen in der Regel eine unmittelbare Verbindung der genannten Komponenten an. Ergänzend sei darauf hingewiesen, dass Begriffe wie "umfassend", "aufweisend" oder "mit" keine anderen Merkmale oder Schritte ausschließen. Ferner schließen Begriffe wie "ein" oder "das", die auf eine Einzahl von Schritten oder Merkmalen hinweisen, keine Mehrzahl von Merkmalen oder Schritten aus - und umgekehrt.

In einer puristischen Ausführungsform der Erfindung kann allerdings auch vorgesehen sein, dass die in der Erfindung mit den Begriffen "umfassend", "aufweisend" oder "mit" eingeführten Merkmale abschließend aufgezählt sind. Dementsprechend kann eine oder können mehrere Aufzählungen von Merkmalen im Rahmen der Erfindung als abgeschlossen betrachtet werden, beispielsweise jeweils für jeden Anspruch betrachtet. Die Erfindung kann beispielsweise ausschließlich aus den in Anspruch 1 genannten Merkmalen bestehen.

Es sei erwähnt, dass Bezeichnungen wie "erstes" oder "zweites" etc. vornehmlich aus Gründen der Unterscheidbarkeit von jeweiligen Vorrichtungs- oder Verfahrensmerkmalen verwendet werden und nicht unbedingt andeuten sollen, dass sich Merkmale gegenseitig bedingen oder miteinander in Beziehung stehen.

Ferner sei betont, dass die vorliegend beschriebenen Werte und Parameter Abweichungen oder Schwankungen von ±10% oder weniger, vorzugsweise ±5% oder weniger, weiter bevorzugt ±1% oder weniger, und ganz besonders bevorzugt ±0,1% oder weniger des jeweils benannten Wertes bzw. Parameters mit einschließen, sofern diese Abweichungen bei der Umsetzung der Erfindung in der Praxis nicht ausgeschlossen sind. Die Angabe von Bereichen durch Anfangs- und Endwerte umfasst auch all diejenigen Werte und Bruchteile, die von dem jeweils benannten Bereich eingeschlossen sind, insbesondere die Anfangs- und Endwerte und einen jeweiligen Mittelwert.

Nachfolgend werden Ausführungsbeispiele der Erfindung anhand der Zeichnungen näher beschrieben.

Die Figuren zeigen jeweils bevorzugte Ausführungsbeispiele, in denen einzelne Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann ohne Weiteres zu weiteren sinnvollen Kombinationen und Unterkombinationen mit Merkmalen anderer Ausführungsbeispiele verbunden werden.

In den Figuren sind funktionsgleiche Elemente mit denselben Bezugszeichen versehen. Es zeigen schematisch:
- Figur 1: eine elektrische Verbraucheranordnung mit einem Energieversorgungssystem, das eine Schaltungsanordnung gemäß einem ersten Beispiel, das nützlich zum Verständnis der Erfindung ist, aufweist;
- Figur 2: eine H-Brückenschaltung einer beispielhafte Wechselrichtereinheit des Wechselrichters einer erfindungsgemäßen Schaltungsanordnung;
- Figur 3: eine elektrische Verbraucheranordnung mit einem Energieversorgungssystem, das eine Schaltungsanordnung gemäß einem zweiten Beispiel, das nützlich zum Verständnis der Erfindung ist, aufweist; und
- Figur 4: eine erfindungsgemäße elektrische Verbraucheranordnung mit einem erfindungsgemäßen Energieversorgungssystem, das eine Schaltungsanordnung gemäß einem Ausführungsbeispiel der Erfindung aufweist

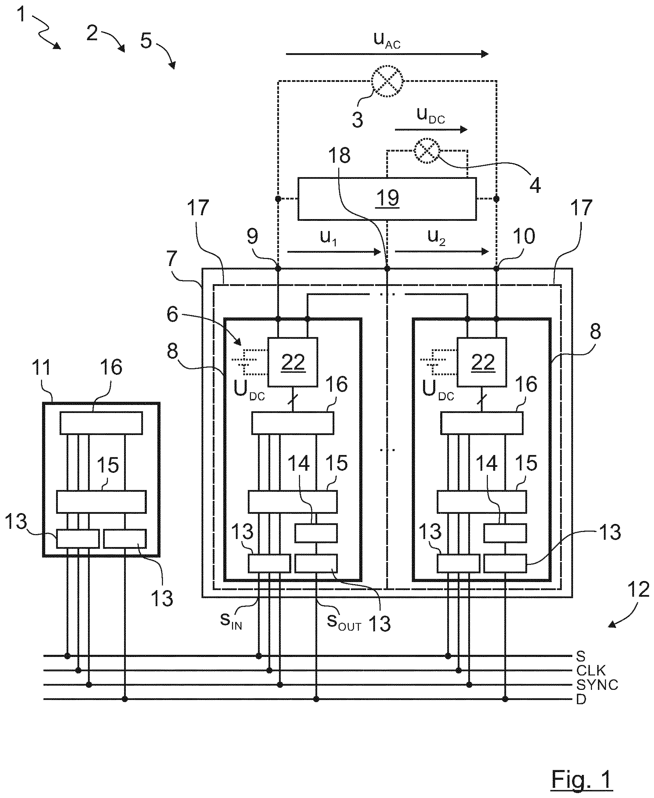

Figur 1 zeigt eine elektrische Verbraucheranordnung 1, bei der es sich beispielsweise um ein Haushaltsstromnetz oder um ein Elektrofahrzeug (insbesondere ein Elektroauto) handeln kann. Die Verbraucheranordnung 1 weist ein Energieversorgungssystem 2 auf, um zumindest einen Primärverbraucher 3 und - optional - zumindest einen Nebenverbraucher 4 elektrisch zu versorgen. Bei dem Primärverbraucher 3 kann es sich grundsätzlich um einen beliebigen Verbraucher handeln, der mit einer Wechselspannung u_{AC} betreibbar ist, beispielsweise um ein Leuchtmittel, eine elektrische Schaltung, eine Wärmequelle und/oder einen Elektromotor. Insbesondere kann es sich bei dem Primärverbraucher 3 um ein herkömmliches Haushaltsgerät oder um mehrere Haushaltsgeräte handeln. Auch der Nebenverbraucher 4 kann mit einer Wechselspannung, gegebenenfalls aber auch mit einer Gleichspannung uoc betreibbar sein.

Das Energieversorgungssystem 2 weist eine Schaltungsanordnung 5 sowie mehrere Gleichspannungsquellen 6 auf. Die Gleichspannungsquellen 6, die in Figur 1 strichliniert dargestellt sind, können Teil einer gemeinsamen Energiespeicherbaugruppe sein. Bei einer solchen Energiespeicherbaugruppe handelt es sich vorzugsweise um eine Batterie bzw. um ein Akkupack, insbesondere um eine Solarbatterie, wobei die einzelnen Gleichspannungsquellen 6 als Batteriezellen bzw. Akkuzellen der Batterie bzw. des Akkupacks ausgebildet sind. Insbesondere kann es sich bei den Gleichspannungsquellen 6 um Batteriezellen eines Photovoltaik-Heimspeichers oder eines Hochvoltspeichers eines Elektrofahrzeugs handeln. Die Energiespeicherbaugruppe wird nachfolgend mitunter auch als Batterie und die Gleichspannungsquellen 6 als Batteriezellen bezeichnet. Dabei handelt es sich aber lediglich um eine bevorzugte Anwendung, die nicht einschränkend zu verstehen ist.

Die Schaltungsanordnung 5 dient somit primär der Erzeugung der Wechselspannung u_{AC} zur Versorgung des Primärverbrauchers 3 und weist hierzu zumindest einen modularen Wechselrichter 7 auf, der als Kaskade aus mehreren Wechselrichtereinheiten 8 ausgebildet ist. Jede der Wechselrichtereinheiten 8 ist hierzu mit einer eigenen Gleichspannungsquelle 6 verbindbar. Durch eine entsprechende Zu- oder Abschaltung der einzelnen Gleichspannungsquellen 6 innerhalb der Reihenschaltung der Wechselrichtereinheiten 8 kann somit eine Wechselspannung u_{AC} erzeugt werden, die vorzugsweise einer sinusförmig oszillierenden Spannung möglichst angenähert ist.

Zur Versorgung des Primärverbrauchers 3 weist der in Figur 1 dargestellte Wechselrichter 7 einen ersten Primärversorgungsanschluss 9 und einen zweiten Primärversorgungsanschluss 10 auf, zwischen denen die Wechselspannung u_{AC} anliegt.

Die Schaltungsanordnung 5 weist eine Steuereinrichtung 11 zur Konfiguration der Wechselrichtereinheiten 8 und ein Datenübertragungssystem 12 zur Signalübertragung zwischen der Steuereinrichtung 11 und den Wechselrichtereinheiten 8 auf. Jede der Wechselrichtereinheiten 8 weist einen Steuereingang s_{IN} sowie einen Datenausgang s_{OUT} auf und ist eingerichtet, in Abhängigkeit von über den Steuereingang s_{IN} empfangenen Steuersignalen der Steuereinrichtung 11 die zugeordnete Gleichspannungsquelle 6 ausgangsseitig für die Erzeugung der Wechselspannung u_{AC} verfügbar zu machen oder nicht verfügbar zu machen.

Das Datenübertragungssystem 12 weist eine mit der Steuereinrichtung 11 verbundene Steuerleitung S und zumindest eine mit der Steuereinrichtung 11 verbundene Datenleitung D auf, wobei die Steuerleitung S außerdem mit den Steuereingängen s_{IN} der Wechselrichtereinheiten 8 und die zumindest eine Datenleitung D mit den Datenausgängen s_{OUT} der Wechselrichtereinheiten 8 verbunden sind. Die Wechselrichtereinheiten 8 sind eingerichtet, um über die zumindest eine Datenleitung D Zustandsinformationen betreffend die jeweils zugeordnete Gleichspannungsquelle 6 an die Steuereinrichtung 11 zu übertragen, wobei die Steuereinrichtung 11 wiederum eingerichtet ist, die Steuersignale zur Konfiguration der Wechselrichtereinheiten 8 in Abhängigkeit der empfangenen Zustandsinformationen zu übertragen.

Bei den genannten Zustandsinformationen kann es sich insbesondere um Informationen zum aktuellen Ladezustand, zur aktuellen Temperatur oder zum aktuellen "Gesundheitszustand" der jeweiligen Gleichspannungsquelle 6 bzw. Batteriezelle handeln. Zur Ermittlung der Zustandsinformationen kann eine die Gleichspannungsquellen 6 gemeinsam umfassende Energiespeicherbaugruppe bzw. die Batterie ein Batteriemanagementsystem aufweisen, das die Zustandsinformationen erfasst und für die einzelnen Wechselrichtereinheiten 8 verfügbar macht.

Insbesondere kann vorgesehen sein, dass die Steuereinrichtung 11 eingerichtet ist, die Wechselspannung u_{AC} durch zyklische Konfiguration der Wechselrichtereinheiten 8 über die Steuerleitung S aus den Einzelspannungen U_{DC} der Gleichspannungsquellen 6 zu erzeugen. Insbesondere kann die Steuereinrichtung 11 dabei eingerichtet sein, die Wechselrichtereinheiten 8 in Abhängigkeit eines als Zustandsinformation an die Steuereinrichtung 11 übermittelten jeweiligen Ladezustands der entsprechenden Gleichspannungsquelle 6 mit dem Ziel eines Ladungsausgleichs zwischen den Gleichspannungsquellen 6 unterschiedlich zu belasten. Auch kann vorgesehen sein, dass die Steuereinrichtung 11 die Wechselrichtereinheiten 8 in Abhängigkeit eines als Zustandsinformation an die Steuereinrichtung 11 übermittelten jeweiligen Ladezustands, Temperaturzustands und/oder Fehlerzustands der entsprechenden Gleichspannungsquelle 6 von der Erzeugung der Wechselspannung u_{AC} zumindest vorübergehend ausschließt.

Eine besonders vorteilhafte Kommunikation zwischen der Steuereinrichtung 11 und den Wechselrichtereinheiten 8 lässt sich erreichen, wenn die Wechselrichtereinheiten 8 die Zustandsinformationen nur auf Anforderung der Steuereinrichtung 11 übertragen. Hierzu kann die Steuereinrichtung 11 die Zustandsinformationen einer jeweiligen Wechselrichtereinheit 8 beispielsweise durch Übertragung eines der entsprechenden Wechselrichtereinheit 8 zugeordneten eindeutigen Identifikators über die Steuerleitung S, einer der nachfolgend genannten weiteren Leitungen oder auf sonstige Weise anfordern.

Zur Verringerung des Einflusses eines Laststroms können optionale Buffer 13 zwischen der jeweiligen Leitung und den Ein- und Ausgängen der Wechselrichtereinheiten 8 und der Steuereinrichtung 11 vorgesehen sein.

Schließlich weisen die Wechselrichtereinheiten 8 außerdem jeweils ein Ausgangsschaltelement 14 auf, das über den Datenausgang s_{OUT} mit der Datenleitung D verbunden ist und das den Datenausgang s_{OUT} in einen hochohmigen Zustand zu verbringen vermag, wenn die entsprechende Wechselrichtereinheit 8 keine Zustandsinformationen überträgt. Konflikte logischer Zustände auf der Datenleitung D können hierdurch besonders einfach vermieden werden.

Um die Datenrate der Signal- und Datenübertragung zwischen der Steuereinrichtung 11 und den Wechselrichtereinheiten 8 zu erhöhen, kann eine Taktgeberleitung CLK vorgesehen sein, um ein synchrones Datenübertragungssystem 12 bereitzustellen. Vorzugsweise erzeugt die Steuereinrichtung 11 ein entsprechendes Taktsignal zur Synchronisierung der Signalübertragung auf der Taktgeberleitung CLK.

Außerdem kann das Datenübertragungssystem 12 eine mit der Steuereinrichtung 11 und allen Wechselrichtereinheiten 8 verbundene Synchronisationsleitung SYNC aufweisen. Die Steuereinrichtung 11 kann eingerichtet sein, ein entsprechendes Synchronisationssignal auf der Synchronisationsleitung SYNC zu erzeugen, wobei die Wechselrichtereinheiten 8 schließlich einen Umschaltzeitpunkt, zu dem im Rahmen der Erzeugung der Wechselspannung u_{AC} eine ausgangsseitige Spannungsänderung der jeweiligen Wechselrichtereinheit 8 erfolgt, mit dem Empfang des Synchronisationssignals zu synchronisieren bzw. zu koppeln.

Vorzugsweise weist das Datenübertragungssystem 12 somit die vier dargestellten Leitungstypen "Steuerleitung S", zumindest eine "Datenleitung D", "Taktgeberleitung CLK" und "Synchronisationsleitung SYNC" auf.

Um die Signalübertragung weiter zu verbessern, kann vorgesehen sein, dass die Steuereinrichtung 11 und die Wechselrichtereinheiten 8 jeweilige Potentialtrennelemente 15 aufweisen, vorzugsweise digitale Isolatoren oder Optokoppler, um die Signalübertragung über die Steuerleitung S, die zumindest eine Datenleitung D, die Taktgeberleitung CLK und/oder die Synchronisationsleitung SYNC beidseitig isoliert und daher auch ausgehend von verschiedenen Spannungspegeln zu ermöglichen.

Die Wechselrichtereinheiten 8 und die Steuereinrichtung 11 können Datenverarbeitungsmodule 16 aufweisen, um die Kommunikationssignale zu erzeugen und auszuwerten und um die nachfolgend noch erwähnten H-Brücken nach Vorgabe der Steuereinrichtung zu verschalten. Das Datenverarbeitungsmodul 16 der Steuereinrichtung 11 kann als Master und die Datenverarbeitungsmodule 16 der Wechselrichtereinheiten 8 können jeweils als Slave ausgebildet sein.

Durch das vorgeschlagene Datenübertragungssystem 12 kann eine besonders vorteilhafte Kommunikationsmöglichkeit zwischen der Steuereinrichtung 11 und den Wechselrichtereinheiten 8 bereitgestellt werden (bzw. zwischen deren jeweiliger Datenverarbeitungsmodule 16), wodurch sich eine Wechselspannung u_{AC} in besonders hoher Qualität durch die vorteilhafte exakte Synchronisierungsmöglichkeit ergeben kann.

Optional, insbesondere wenn neben dem Primärverbraucher 3 noch ein Nebenverbraucher 4 mit einer Sekundärspannung u₁, u₂ versorgt werden soll, kann der modulare Wechselrichter 7 in zumindest zwei Wechselrichtermodule 17 untergliedert sein, auf die die Wechselrichtereinheiten 8 verteilt sind, vorzugsweise gleichmäßig verteilt sind, und die zu einer Reihenschaltung miteinander verbunden sind, um gemeinsam die Wechselspannung u_{AC} zwischen den Primärversorgungsanschlüssen 9, 10 für den Primärverbraucher 3 zu erzeugen. Zwischen den Wechselrichtermodulen 17 kann ein Sekundärversorgungsanschluss 18 angeordnet sein. Die Steuereinrichtung 11 kann schließlich eingerichtet sein, die Wechselrichtereinheiten 8 der Wechselrichtermodule 17 derart zu konfigurieren, dass sich zumindest eine Sekundärspannung u₁, u₂ zwischen dem Sekundärversorgungsanschluss 18 und einem der Primärversorgungsanschlüsse 9, 10 zur Versorgung des Nebenverbrauchers 4 ergibt.

Insofern für den Betrieb des Nebenverbrauchers 4 eine Gleichspannung u_{DC} erforderlich ist, kann vorzugsweise noch ein Gleichrichter 19 vorgesehen sein, der eingangsseitig mit dem ersten Primärversorgungsanschluss 9, mit dem zweiten Primärversorgungsanschluss 10 und mit dem Sekundärversorgungsanschluss 18 verbunden ist, um aus einer oder aus mehreren der sich zwischen den genannten eingangsseitig verbundenen Versorgungsanschlüssen 9, 10, 18 ergebenden Potentialdifferenzen u₁, u₂, u_{AC} die gewünschte Gleichspannung u_{DC} zu erzeugen. Vorzugsweise kann der Gleichrichter 19 eine elektronische Ventilanordnung aufweisen, insbesondere mit Dioden als Ventileinheiten. Gegebenenfalls kann auch ein Gleichstromsteller vorgesehen sei, um eine geregelte Gleichspannung zu erzeugen.

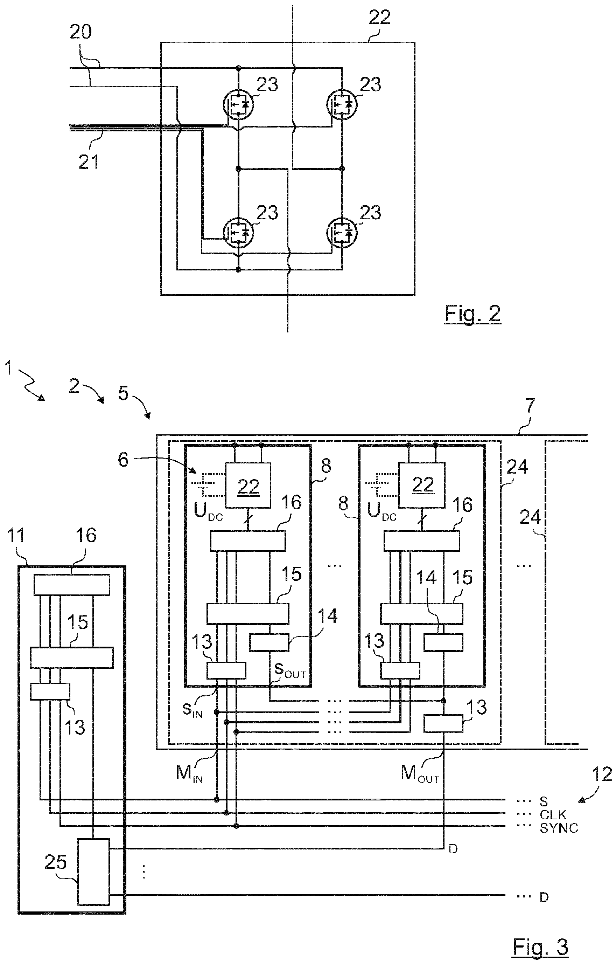

Die kaskadierten Wechselrichtereinheiten 8 können grundsätzlich eine beliebige Schaltung aufweisen, um die Gleichspannungsquellen 6 gemäß Vorgabe miteinander zu verschalten. Ein beispielhafter Aufbau ist in Figur 2 gezeigt. Jede Wechselrichtereinheit 8 kann Versorgungsleitungen 20 aufweisen, die mit den Batteriezellen bzw. Gleichspannungsquellen 6 verbindbar sind. Ferner weisen die Wechselrichtereinheiten 8 Kommunikationsleitungen 21 auf, die mit dem Datenverarbeitungsmodul 16 der Wechselrichtereinheit 8 und/oder mit der Steuereinrichtung 11 der Schaltungsanordnung 5 verbunden sein können.

Die Wechselrichtereinheiten 8 können insbesondere jeweils eine H-Brückenschaltung 22 aus vier von der Steuereinrichtung 11 bzw. dem Steuermodul 16 konfigurierbaren, leistungselektronischen Schaltelementen 23 aufweisen. Die leistungselektronischen Schaltelemente 23 können beispielsweise als Halbleiterbauelemente ausgebildet sein, insbesondere als in Figur 2 angedeutete MOSFETs. Durch entsprechende Konfiguration der Schaltelemente 23 lassen sich ausgangsseitig jeweils drei mögliche Spannungspegel vorgeben (0, +U_{DC} und -U_{DC}).

Ein Nachteil der vorgeschlagenen Ausgangsschaltelemente 14 kann eine niedrige Übertragungsrate der Datenleitung D insbesondere bei größeren Leitungslängen darstellen, da sich dann vergleichsweise hohe Leitungskapazitäten ergeben können. Um die Datenübertragungsrate zu erhöhen, kann eine Kombination mehrerer Wechselrichtereinheiten 8 in einer gemeinsamen Modulgruppe 24 vorgesehen sein, wie in Figur 3 dargestellt.

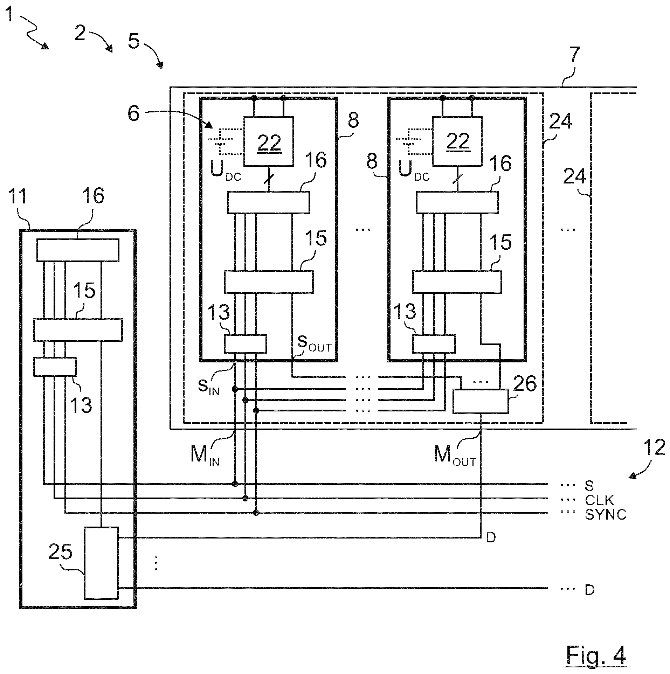

Einige Details, insbesondere ausgangsseitige Details, wie die Verschaltung mit dem Primärverbraucher 3 und dem optionalen Nebenverbraucher 4, sind in den Figuren 3 und 4 zur Vereinfachung nicht dargestellt.

Die Schaltungsanordnung 5 kann mehrere der besagten Modulgruppen 24 aufweisen, wobei jede der Modulgruppen 24 einen mit allen Steuereingängen s_{IN} der Wechselrichtereinheiten 8 der Modulgruppe 24 verbundenen Modulsteuereingang M_{IN} und einen mit allen Datenausgängen s_{OUT} der Wechselrichtereinheiten 8 der Modulgruppe 24 verbundenen Moduldatenausgang M_{OUT} aufweist. Innerhalb der jeweiligen Modulgruppe 24 kann die Leitungslänge deutlich verkleinert sein. Die einzelnen Datenausgänge s_{OUT} der Wechselrichtereinheiten 8 einer Modulgruppe 24 können innerhalb der Modulgruppe 24 problemlos zusammengefasst bzw. zusammengeschaltet werden.

Erfindungsgemäß ist in dem Datenübertragungssystem 12 genau eine Datenleitung D für jede der Modulgruppen 24 vorgesehen. Die Steuereinrichtung 11 weist schließlich ein logisches Eingangsgatter 25 auf, vorzugsweise ein ODER-Gatter, das eingangsseitig mit den einzelnen Datenleitungen D der Modulgruppen 24 verbunden ist und ausgangsseitig eine einzige, kombinierte Datenleitung für die Weiterverarbeitung innerhalb der Steuereinrichtung 11 bereitstellt.

Hierdurch kann die Datenübertragung über die Datenleitung D insgesamt deutlich beschleunigt werden.

Um die Übertragungsrate über die Datenleitung D weiter zu erhöhen, wird außerdem eine in Figur 4 dargestellte, ergänzende Ausgestaltung vorgesehen, wonach jede der Modulgruppen 24 ein logisches Ausgangsgatter 26 aufweist, vorzugsweise ebenfalls ein ODER-Gatter, das eingangsseitig mit den einzelnen Datenausgängen s_{OUT} der Wechselrichtereinheiten 8 der Modulgruppe 24 und ausgangsseitig mit dem Moduldatenausgang M_{OUT} der Modulgruppe 24 verbunden ist.

## Patentansprüche

1. Schaltungsanordnung (5) zur Erzeugung einer Wechselspannung (u_{AC}), aufweisend:
- zumindest einen modularen Wechselrichter (7), der als Kaskade aus mehreren Wechselrichtereinheiten (8) ausgebildet ist;
- eine Steuereinrichtung (11) zur Konfiguration der Wechselrichtereinheiten (8); und
- ein Datenübertragungssystem (12) zur Signalübertragung zwischen der Steuereinrichtung (11) und den Wechselrichtereinheiten (8),
wobei jede der Wechselrichtereinheiten (8) mit einer eigenen Gleichspannungsquelle (6) verbindbar ist, einen Steuereingang (s_{IN}) sowie einen Datenausgang (s_{OUT}) aufweist und eingerichtet ist, in Abhängigkeit von über den Steuereingang (s_{IN}) empfangenen Steuersignalen der Steuereinrichtung (11) die zugeordnete Gleichspannungsquelle (6) ausgangsseitig für die Erzeugung der Wechselspannung (u_{AC}) verfügbar zu machen oder nicht verfügbar zu machen, wobei das Datenübertragungssystem (12) eine mit der Steuereinrichtung (11) verbundene Steuerleitung (S) und zumindest eine mit der Steuereinrichtung (11) verbundene Datenleitung (D) aufweist, wobei die Steuerleitung (S) außerdem mit den Steuereingängen (s_{IN}) der Wechselrichtereinheiten (8) und die zumindest eine Datenleitung (D) mit den Datenausgängen (s_{OUT}) der Wechselrichtereinheiten (8) verbunden sind, wobei die Wechselrichtereinheiten (8) eingerichtet sind, über die zumindest eine Datenleitung (D) Zustandsinformationen betreffend die jeweils zugeordnete Gleichspannungsquelle (6) an die Steuereinrichtung (11) zu übertragen, und wobei die Steuereinrichtung (11) eingerichtet ist, die Steuersignale zur Konfiguration der Wechselrichtereinheiten (8) in Abhängigkeit der empfangenen Zustandsinformationen zu übertragen,
**dadurch gekennzeichnet, dass**
mehrere der Wechselrichtereinheiten (8) zu einer gemeinsamen Modulgruppe (24) zusammengefasst sind, wobei die Schaltungsanordnung (5) mehrere der besagten Modulgruppen (24) aufweist, und wobei jede der Modulgruppen (24) einen mit allen Steuereingängen (s_{IN}) der Wechselrichtereinheiten (8) der Modulgruppe (24) verbundenen Modulsteuereingang (M_{IN}) und einen mit allen Datenausgängen (s_{OUT}) der Wechselrichtereinheiten (8) der Modulgruppe (24) verbundenen Moduldatenausgang (M_{OUT}) aufweist, wobei das Datenübertragungssystem (12) genau eine Datenleitung (D) für jede der Modulgruppen (24) aufweist, wobei die Steuereinrichtung (11) ein logisches Eingangsgatter (25) aufweist, vorzugsweise ein ODER-Gatter, das eingangsseitig mit den Datenleitungen (D) verbunden ist und ausgangsseitig eine einzige, kombinierte Datenleitung für die Weiterverarbeitung innerhalb der Steuereinrichtung (11) bereitstellt, und wobei jede der Modulgruppen (24) ein logisches Ausgangsgatter (26) aufweist, vorzugsweise ein ODER-Gatter, das eingangsseitig mit den einzelnen Datenausgängen (s_{OUT}) der Wechselrichtereinheiten (8) der Modulgruppe (24) und ausgangsseitig mit dem Moduldatenausgang (M_{OUT}) der Modulgruppe (24) verbunden ist.

2. Schaltungsanordnung (5) nach Anspruch 1,
**dadurch gekennzeichnet, dass**
die Steuereinrichtung (11) eingerichtet ist, die Wechselspannung (u_{AC}) durch zyklische Konfiguration der Wechselrichtereinheiten (8) über die Steuerleitung (S) aus den Einzelspannungen der Gleichspannungsquellen (6) zu erzeugen, wobei die Steuereinrichtung (11) weiter eingerichtet ist, die Wechselrichtereinheiten (8) in Abhängigkeit eines als Zustandsinformation an die Steuereinrichtung (11) übermittelten jeweiligen Ladezustands der entsprechenden Gleichspannungsquelle (6) mit dem Ziel eines Ladungsausgleichs zwischen den Gleichspannungsquellen (6) unterschiedlich zu belasten.

3. Schaltungsanordnung (5) nach Anspruch 1 oder 2,
**dadurch gekennzeichnet, dass**
die Steuereinrichtung (11) eingerichtet ist, die Wechselspannung (u_{AC}) durch zyklische Konfiguration der Wechselrichtereinheiten (8) über die Steuerleitung (S) aus den Einzelspannungen der Gleichspannungsquellen (6) zu erzeugen, wobei die Steuereinrichtung (11) weiter eingerichtet ist, die Wechselrichtereinheiten (8) in Abhängigkeit eines als Zustandsinformation an die Steuereinrichtung (11) übermittelten jeweiligen Ladezustands, Temperaturzustands und/oder Fehlerzustands der entsprechenden Gleichspannungsquelle (6) von der Erzeugung der Wechselspannung (u_{AC}) zumindest vorübergehend auszuschließen.

4. Schaltungsanordnung (5) nach einem der Ansprüche 1 bis 3,
**dadurch gekennzeichnet, dass**
die Wechselrichtereinheiten (8) eingerichtet sind, die Zustandsinformationen nur auf Anforderung der Steuereinrichtung (11) zu übertragen, wobei die Steuereinrichtung (11) eingerichtet ist, die Zustandsinformationen einer jeweiligen Wechselrichtereinheit (8) durch Übertragung eines der entsprechenden Wechselrichtereinheit (8) zugeordneten eindeutigen Identifikators über die Steuerleitung (S) anzufordern.

5. Schaltungsanordnung (5) nach einem der Ansprüche 1 bis 4,
**dadurch gekennzeichnet, dass**
die Wechselrichtereinheiten (8) jeweils ein Ausgangsschaltelement (14) aufweisen, das über den Datenausgang (s_{OUT}) mit der Datenleitung (D) verbunden ist, und das den Datenausgang (s_{OUT}) in einen hochohmigen Zustand zu verbringen vermag, wenn die entsprechende Wechselrichtereinheit (8) keine Zustandsinformation überträgt.

6. Schaltungsanordnung (5) nach einem der Ansprüche 1 bis 5,
**dadurch gekennzeichnet, dass**
das Datenübertragungssystem (12) außerdem eine mit der Steuereinrichtung (11) und allen Wechselrichtereinheiten (8) verbundene Taktgeberleitung (CLK) aufweist, wobei die Steuereinrichtung (11) eingerichtet ist, ein Taktsignal zur Synchronisierung der Signalübertragung zwischen der Steuereinrichtung (11) und den Wechselrichtereinheiten (8) auf der Taktgeberleitung (CLK) zu erzeugen.

7. Schaltungsanordnung (5) nach einem der Ansprüche 1 bis 6,
**dadurch gekennzeichnet, dass**
das Datenübertragungssystem (12) außerdem eine mit der Steuereinrichtung (11) und allen Wechselrichtereinheiten (8) verbundene Synchronisationsleitung (SYNC) aufweist, wobei die Steuereinrichtung (11) eingerichtet ist, ein Synchronisationssignal auf der Synchronisationsleitung (SYNC) zu erzeugen, und wobei die Wechselrichtereinheiten (8) eingerichtet sind, einen Umschaltzeitpunkt, zu dem im Rahmen der Erzeugung der Wechselspannung (u_{AC}) eine ausgangsseitige Spannungsänderung der jeweiligen Wechselrichtereinheit (8) erfolgt, mit dem Empfang des Synchronisationssignals zu synchronisieren.

8. Schaltungsanordnung (5) nach einem der Ansprüche 1 bis 7,
**dadurch gekennzeichnet, dass**
die Steuereinrichtung (11) und die Wechselrichtereinheiten (8) jeweilige Potentialtrennelemente (15) aufweisen, vorzugsweise digitale Isolatoren oder Optokoppler, um die Signalübertragung über die Steuerleitung (S), die zumindest eine Datenleitung (D), die Taktgeberleitung (CLK) und/oder die Synchronisationsleitung (SYNC) isoliert und ausgehend von verschiedenen Spannungspegeln zu ermöglichen.

9. Schaltungsanordnung (5) nach einem der Ansprüche 1 bis 8,
**dadurch gekennzeichnet, dass**
der modulare Wechselrichter (7) zumindest zwei Wechselrichtermodule (17) aufweist, wobei die Wechselrichtereinheiten (8) des Wechselrichters (7) gleichmäßig auf die zumindest zwei Wechselrichtermodule (17) verteilt sind, und wobei die Wechselrichtermodule (17) zu einer Reihenschaltung verbunden sind, um gemeinsam die Wechselspannung (u_{AC}) zwischen zwei außenseitigen Primärversorgungsanschlüssen (9, 10) der Reihenschaltung für einen mit der Schaltungsanordnung (5) verbindbaren Primärverbraucher (3) zu erzeugen, wobei zwischen den Wechselrichtermodulen (17) ein Sekundärversorgungsanschluss (18) angeordnet ist, und wobei die Steuereinrichtung (11) eingerichtet ist, die Wechselrichtereinheiten (8) der Wechselrichtermodule (17) derart zu konfigurieren, dass sich eine Sekundärspannung (u₂) zwischen dem Sekundärversorgungsanschluss (18) und einem der Primärversorgungsanschlüsse (9, 10) zur Versorgung eines mit der Schaltungsanordnung (5) verbindbaren Nebenverbrauchers (4) ergibt.

10. Energieversorgungssystem (2), aufweisend eine Schaltungsanordnung (5) nach einem der Ansprüche 1 bis 9 und die Gleichspannungsquellen (6), wobei die Gleichspannungsquellen (6) vorzugsweise als Batteriezellen einer Batterie ausgebildet sind.

11. Elektrische Verbraucheranordnung (1), insbesondere Elektrofahrzeug oder Haushaltsstromnetz, aufweisend ein Energieversorgungssystem (2) nach Anspruch 10 und zumindest einen Primärverbraucher (3), der mit der Wechselspannung (u_{AC}) betrieben wird.

12. Verfahren zur Erzeugung einer Wechselspannung (u_{AC}), aufweisend zumindest die folgenden Verfahrensschritte:
- Betreiben eines modularen Wechselrichters (7), der als Kaskade aus mehreren Wechselrichtereinheiten (8) ausgebildet ist, wobei jede der Wechselrichtereinheiten (8) mit einer eigenen Gleichspannungsquelle (6) verbunden ist;
- Betreiben einer Steuereinrichtung (11) zur Konfiguration der Wechselrichtereinheiten (8), wobei die Wechselrichtereinheiten (8) die zugeordnete Gleichspannungsquelle (6) in Abhängigkeit der Vorgabe der Steuereinrichtung (11) ausgangsseitig für die Erzeugung der Wechselspannung (u_{AC}) jeweils verfügbar machen oder nicht verfügbar machen, und wobei die Wechselrichtereinheiten (8) Zustandsinformationen über die jeweils zugeordnete Gleichspannungsquelle (6) über eine Datenleitung (D) eines Datenübertragungssystems (12) an die Steuereinrichtung (11) übertragen, und wobei die Steuereinrichtung (11) Steuersignale zur Konfiguration der Wechselrichtereinheiten (8) in Abhängigkeit der empfangenen Zustandsinformationen über eine Steuerleitung (S) des Datenübertragungssystems (12) an die Wechselrichtereinheiten (8) überträgt; und
- Zusammenfassen mehrerer der Wechselrichtereinheiten (8) zu einer gemeinsamen Modulgruppe (24), wobei die Schaltungsanordnung (5) mehrere der besagten Modulgruppen (24) aufweist, und wobei jede der Modulgruppen (24) einen mit allen Steuereingängen (s_{IN}) der Wechselrichtereinheiten (8) der Modulgruppe (24) verbundenen Modulsteuereingang (M_{IN}) und einen mit allen Datenausgängen (s_{OUT}) der Wechselrichtereinheiten (8) der Modulgruppe (24) verbundenen Moduldatenausgang (M_{OUT}) aufweist, wobei das Datenübertragungssystem (12) genau eine Datenleitung (D) für jede der Modulgruppen (24) aufweist, wobei die Steuereinrichtung (11) ein logisches Eingangsgatter (25) aufweist, vorzugsweise ein ODER-Gatter, das eingangsseitig mit den Datenleitungen (D) verbunden ist und ausgangsseitig eine einzige, kombinierte Datenleitung für die Weiterverarbeitung innerhalb der Steuereinrichtung (11) bereitstellt, und wobei jede der Modulgruppen (24) ein logisches Ausgangsgatter (26) aufweist, vorzugsweise ein ODER-Gatter, das eingangsseitig mit den einzelnen Datenausgängen (s_{OUT}) der Wechselrichtereinheiten (8) der Modulgruppe (24) und ausgangsseitig mit dem Moduldatenausgang (M_{OUT}) der Modulgruppe (24) verbunden ist.

## Claims

1. A circuit arrangement (5) for generating an AC voltage (u_{AC}), comprising:
- at least one modular inverter (7), which is in the form of a cascade of multiple inverter units (8);
- a control device (11) for configuring the inverter units (8); and
- a data transmission system (12) for signal transmission between the control device (11) and the inverter units (8),
wherein each of the inverter units (8) can be connected to a dedicated DC voltage source (6), has a control input (s_{IN}) and a data output (s_{OUT}) and is designed to take control signals from the control device (11) that are received via the control input (s_{IN}) as a basis for making the associated DC voltage source (6) available on the output side for generating the AC voltage (u_{AC}) or unavailable, wherein the data transmission system (12) has a control line (S) connected to the control device (11) and at least one data line (D) connected to the control device (11), wherein additionally the control line (S) is connected to the control inputs (s_{IN}) of the inverter units (8) and the at least one data line (D) is connected to the data outputs (s_{OUT}) of the inverter units (8), wherein the inverter units (8) are designed to use the at least one data line (D) to transmit state information relating to the respective associated DC voltage source (6) to the control device (11), and wherein the control device (11) is designed to transmit the control signals to configure the inverter units (8) on the basis of the received state information,
**characterized in that**
multiple instances of the inverter units (8) are combined to form a common module group (24), wherein the circuit arrangement (5) has multiple instances of said module groups (24), and wherein each of the module groups (24) has a module control input (M_{IN}) connected to all the control inputs (s_{IN}) of the inverter devices (8) in the module group (24) and a module data output (M_{OUT}) connected to all the data outputs (s_{OUT}) of the inverter units (8) in the module group (24), wherein the data transmission system (12) has precisely one data line (D) for each of the module groups (24), wherein the control device (11) has a logic input gate (25), preferably an OR gate, the input side of which is connected to the data lines (D) and the output side of which provides a single, combined data line for the further processing within the control device (11), and wherein each of the module groups (24) has a logic output gate (26), preferably an OR gate, the input side of which is connected to the individual data outputs (s_{OUT}) of the inverter units (8) in the module group (24) and the output side of which is connected to the module data output (M_{OUT}) of the module group (24).

2. The circuit arrangement (5) as claimed in claim 1,
**characterized in that**
the control device (11) is designed to generate the AC voltage (u_{AC}) from the individual voltages of the DC voltage sources (6) by cyclically configuring the inverter units (8) via the control line (S), wherein the control device (11) is further designed to load the inverter units (8) differently on the basis of a respective state of charge of the applicable DC voltage source (6), which is transferred to the control device (11) as state information, with the aim of charge balancing between the DC voltage sources (6).

3. The circuit arrangement (5) as claimed in claim 1 or 2,
**characterized in that**
the control device (11) is designed to generate the AC voltage (u_{AC}) from the individual voltages of the DC voltage sources (6) by cyclically configuring the inverter units (8) via the control line (S), wherein the control device (11) is further designed to at least temporarily exclude the inverter units (8) from generation of the AC voltage (u_{AC}) on the basis of a respective state of charge, temperature state and/or fault state of the applicable DC voltage source (6), which is transferred to the control device (11) as state information.

4. The circuit arrangement (5) as claimed in one of claims 1 to 3,
**characterized in that**
the inverter units (8) are designed to transmit the state information only at the request of the control device (11), wherein the control device (11) is designed to request the state information of a respective inverter unit (8) by transmitting a unique identifier associated with the applicable inverter unit (8) via the control line (S).

5. The circuit arrangement (5) as claimed in one of claims 1 to 4,
**characterized in that**
the inverter units (8) each have an output switching element (14) that is connected to the data line (D) via the data output (s_{OUT}) and that is able to put the data output (s_{OUT}) into a high-impedance state if the applicable inverter unit (8) does not transmit state information.

6. The circuit arrangement (5) as claimed in one of claims 1 to 5,
**characterized in that**
the data transmission system (12) additionally has a clock generator line (CLK) connected to the control device (11) and all the inverter units (8), wherein the control device (11) is designed to generate a clock signal to synchronize the signal transmission between the control device (11) and the inverter units (8) on the clock generator line (CLK).

7. The circuit arrangement (5) as claimed in one of claims 1 to 6,
**characterized in that**
the data transmission system (12) additionally has a synchronization line (SYNC) connected to the control device (11) and all the inverter units (8), wherein the control device (11) is designed to generate a synchronization signal on the synchronization line (SYNC), and wherein the inverter units (8) are designed to synchronize a changeover time, at which an output-side voltage change on the respective inverter unit (8) takes place while the AC voltage (u_{AC}) is being generated, with reception of the synchronization signal.

8. The circuit arrangement (5) as claimed in one of claims 1 to 7,
**characterized in that**
the control device (11) and the inverter units (8) have respective potential-isolating elements (15), preferably digital isolators or optocouplers, in order to facilitate signal transmission via the control line (S), the at least one data line (D), the clock generator line (CLK) and/or the synchronization line (SYNC) in isolated fashion and based on different voltage levels.

9. The circuit arrangement (5) as claimed in one of claims 1 to 8,
**characterized in that**
the modular inverter (7) has at least two inverter modules (17), wherein the inverter units (8) of the inverter (7) are uniformly distributed over the at least two inverter modules (17), and wherein the inverter modules (17) are connected to form a series arrangement in order to collectively generate the AC voltage (u_{AC}) between two output-side primary supply terminals (9, 10) of the series arrangement for a primary load (3) that can be connected to the circuit arrangement (5), wherein the inverter modules (17) have a secondary supply terminal (18) arranged between them, and wherein the control device (11) is designed to configure the inverter units (8) of the inverter modules (17) in such a way that a secondary voltage (uz) is produced between the secondary supply terminal (18) and one of the primary supply terminals (9, 10) to supply power to a secondary load (4) that can be connected to the circuit arrangement (5).

10. A power supply system (2), comprising a circuit arrangement (5) as claimed in one of claims 1 to 9 and the DC voltage sources (6), wherein the DC voltage sources (6) are preferably in the form of battery cells of a battery.

11. An electrical load arrangement (1), in particular an electric vehicle or household power grid, comprising a power supply system (2) as claimed in claim 10 and at least one primary load (3) that is operated using the AC voltage (u_{AC}).

12. A method for generating an AC voltage (u_{AC}), comprising at least the following method steps:
- operating a modular inverter (7), which is in the form of a cascade of multiple inverter units (8), wherein each of the inverter units (8) is connected to a dedicated DC voltage source (6);
- operating a control device (11) for configuring the inverter units (8), wherein the inverter units (8) each take the specification by the control device (11) as a basis for making the associated DC voltage source (6) available on the output side for generating the AC voltage (u_{AC}) or unavailable, and wherein the inverter units (8) transmit state information about the respective associated DC voltage source (6) to the control device (11) via a data line (D) of a data transmission system (12), and wherein the control device (11) transmits control signals to configure the inverter units (8) on the basis of the received state information to the inverter units (8) via a control line (S) of the data transmission system (12); and
- combine multiple instances of the inverter units (8) to form a common module group (24), wherein the circuit arrangement (5) has multiple instances of said module groups (24), and wherein each of the module groups (24) has a module control input (M_{IN}) connected to all the control inputs (s_{IN}) of the inverter devices (8) in the module group (24) and a module data output (M_{OUT}) connected to all the data outputs (s_{OUT}) of the inverter units (8) in the module group (24), wherein the data transmission system (12) has precisely one data line (D) for each of the module groups (24), wherein the control device (11) has a logic input gate (25), preferably an OR gate, the input side of which is connected to the data lines (D) and the output side of which provides a single, combined data line for the further processing within the control device (11), and wherein each of the module groups (24) has a logic output gate (26), preferably an OR gate, the input side of which is connected to the individual data outputs (s_{OUT}) of the inverter units (8) in the module group (24) and the output side of which is connected to the module data output (M_{OUT}) of the module group (24).

## Revendications

1. Ensemble de circuits (5) pour la génération d'une tension alternative (u_{AC}), comprenant :
- au moins un onduleur modulaire (7) conçu sous la forme d'une cascade de plusieurs unités d'onduleur (8) ;
- un dispositif de commande (11) pour configurer les unités d'onduleur (8) ; et
- un système de transmission de données (12) pour transmettre des signaux entre le dispositif de commande (11) et les unités d'onduleur (8),
dans lequel chacune des unités d'onduleur (8) peut être connectée à sa propre source de tension continue (6), présente une entrée de commande (s_{IN}) ainsi qu'une sortie de données (S_{OUT}) et est configurée de manière à rendre la source de tension continue associée (6) disponible ou indisponible sur le côté de sortie pour la génération de la tension alternative (u_{AC}) en fonction des signaux du dispositif de commande (11) reçus par l'intermédiaire de l'entrée de commande (S_{IN}), dans lequel le système de transmission de données (12) comprend une ligne de commande (S) qui est connectée au dispositif de commande (11) et au moins une ligne de données (D) qui est connectée au dispositif de commande (11), dans lequel la ligne de commande (S) est en outre connectée aux entrées de commande (s_{IN}) des unités d'onduleur (8) et ladite au moins une ligne de données (D) est connectée aux sorties de données (S_{OUT}) des unités d'onduleur (8), dans lequel les unités d'onduleur (8) sont agencées de manière à transmettre des informations de statut relatives à la source de tension respectivement associée (6) au dispositif de commande (11) par l'intermédiaire de ladite au moins une ligne de données (D), et dans lequel le dispositif de commande (11) est conçu de manière à transmettre les signaux de commande pour la configuration des unités d'onduleur (8) en fonction des informations de statut reçues,
**caractérisé en ce que** plusieurs des unités d'onduleur (8) sont combinées de manière à former un groupe de modules commun (24), dans lequel l'ensemble de circuits (5) comprend plusieurs desdits groupes de modules (24), et dans lequel chacun des groupes de modules (24) présente une entrée de commande de module (M_{IN}) qui est connectée à la totalité des entrées de commande (s_{IN}) des unités d'onduleur (8) du groupe de modules (24) et une sortie de données de module (M_{OUT}) qui est connectée à la totalité des sorties de données (S_{OUT}) des unités d'onduleur (8) du groupe de modules (24), dans lequel le système de transmission de données (12) comprend exactement une ligne de données (D) pour chacun des groupes de modules (24), dans lequel le dispositif de commande (11) comprend une porte d'entrée logique (25), de préférence une porte OU, qui est connectée aux lignes de données (D) sur le côté d'entrée et qui fournit une seule ligne de données combinée sur le côté de sortie en vue d'un traitement ultérieur à l'intérieur du dispositif de commande (11), et dans lequel chacun des groupes de modules (24) comprend une porte logique de sortie (26), de préférence une porte OU, qui est connectée sur le côté d'entrée aux différentes sorties de données (S_{OUT}) des unités d'onduleur (8) du groupe de modules (24) et sur le côté de sortie à la sortie de données de module (M_{OUT}) du groupe de modules (24).

2. Ensemble de circuits (5) selon la revendication 1, **caractérisé en ce que** le dispositif de commande (11) est agencé de manière à générer la tension alternative (u_{AC}) par une configuration cyclique des unités d'onduleur (8) par l'intermédiaire de la ligne de commande (S) à partir des tensions individuelles des sources de tension continue (6), dans lequel le dispositif de commande (11) est en outre conçu de manière à charger les unités d'onduleur (8) de façon différente en fonction d'un état de charge respectif de la source de tension continue correspondante (6) qui est transmis au dispositif de commande (11) en tant qu'information de statut, dans le but d'équilibrer la charge entre les sources de tension continue (6).

3. Ensemble de circuits (5) selon la revendication 1 ou 2, **caractérisé en ce que** le dispositif de commande (11) est agencé de manière à générer la tension alternative (u_{AC}) par une configuration cyclique des unités d'onduleur (8) par l'intermédiaire de la ligne de commande (S) à partir des tensions individuelles des sources de tension continue (6), dans lequel le dispositif de commande (11) est en outre agencé de manière à exclure, au moins temporairement, les unités d'onduleur (8) de la génération de la tension alternative (u_{AC}) en fonction d'un état de charge respectif, d'un état de température respectif et/ou d'un état de défaut respectif de la source de tension continue correspondante (6) qui est transmis au dispositif de commande (11) en tant qu'information de statut.

4. Ensemble de circuits (5) selon l'une quelconque des revendications 1 à 3, **caractérisé en ce que** les unités d'onduleur (8) sont agencées de manière à transmettre les informations de statut uniquement sur demande du dispositif de commande (11), dans lequel le dispositif de commande (11) est conçu de manière à demander des informations de statut d'une unité d'onduleur respective (8) en transmettant un identifiant unique associé à l'unité d'onduleur correspondante (8) par l'intermédiaire de la ligne de commande (S).

5. Ensemble de circuits (5) selon l'une quelconque des revendications 1 à 4, **caractérisé en ce que** les unités d'onduleur (8) comprennent chacune un élément de commutation de sortie (14) qui est connecté à la ligne de données (D) par l'intermédiaire de la sortie de données (S_{OUT}) et qui est capable d'amener la sortie de données (S_{OUT}) dans un état de haute impédance lorsque l'unité d'onduleur correspondante (8) ne transmet pas d'information de statut.

6. Ensemble de circuits (5) selon l'une quelconque des revendications 1 à 5, **caractérisé en ce que** le système de transmission de données (12) comprend en outre une ligne d'horloge (CLK) qui est connectée au dispositif de commande (11) ainsi qu'à la totalité des unités d'onduleur (8), dans lequel le dispositif de commande (11) est agencé de manière à générer un signal d'horloge pour synchroniser la transmission de signaux entre le dispositif de commande (11) et les unités d'onduleur (8) sur la ligne d'horloge (CLK).

7. Ensemble de circuits (5) selon l'une quelconque des revendications 1 à 6, **caractérisé en ce que** le système de transmission de données (12) comprend en outre une ligne de synchronisation (SYNC) qui est connectée au dispositif de commande (11) ainsi qu'à la totalité des unités d'onduleur (8), dans lequel le dispositif de commande (11) est agencé de manière à générer un signal de synchronisation sur la ligne de synchronisation (SYNC), et dans lequel les unités d'onduleur (8) sont conçues de manière à synchroniser un temps de commutation auquel une variation de la tension sur le côté de sortie de l'unité d'onduleur respectif (8) se produit pendant la génération de la tension alternative (u_{AC}) avec la réception du signal de synchronisation.

8. Ensemble de circuits (5) selon l'une quelconque des revendications 1 à 7, **caractérisé en ce que** le dispositif de commande (11) et les unités d'onduleur (8) comprennent des éléments de séparation de potentiel respectifs (15), de préférence des isolateurs numériques ou des optocoupleurs, pour permettre la transmission de signaux par l'intermédiaire de la ligne de commande (S), de ladite au moins une ligne de données (D), de la ligne d'horloge (CLK) et/ou de la ligne de synchronisation (SYNC) de façon isolée et à partir de niveaux de tension différents.

9. Ensemble de circuits (5) selon l'une quelconque des revendications 1 à 8, **caractérisé en ce que** l'onduleur modulaire (7) comprend au moins deux modules d'onduleur (17), dans lequel les unités d'onduleur (8) de l'onduleur (7) sont distribuées de façon uniforme sur lesdits au moins deux modules d'onduleur (17), et dans lequel les modules d'onduleur (17) sont connectés de manière à former un circuit en série pour fournir en commun la tension alternative (u_{AC}) entre deux connexions d'alimentation primaire extérieures (9, 10) du circuit en série pour un consommateur primaire (3) qui peut être connecté à l'ensemble de circuits (5), dans lequel une connexion d'alimentation secondaire (18) est agencée entre les modules d'onduleur (17), et dans lequel le dispositif de commande (11) est agencé de manière à configurer les unités d'onduleur (8) des modules d'onduleur (17) de telle sorte qu'une tension secondaire (uz) soit générée entre la connexion d'alimentation secondaire (18) et l'une des connexions d'alimentation primaire (9, 10) pour alimenter un consommateur secondaire (4) qui peut être connecté à l'ensemble de circuits (5).

10. Système d'alimentation électrique (2) comprenant un ensemble de circuits (5) selon l'une quelconque des revendications 1 à 9 ainsi que les sources de tension continue (6), dans lequel les sources de tension continue (6) sont de préférence des cellules de batterie d'une batterie.

11. Ensemble de consommateur électrique (1), en particulier véhicule électrique ou réseau électrique domestique, comprenant un système d'alimentation électrique (2) selon la revendication 10 et au moins un consommateur primaire (3) alimenté par la tension alternative (u_{AC}).

12. Procédé de génération d'une tension alternative (u_{AC}), comprenant au moins les étapes de procédé suivantes :
- actionner un onduleur modulaire (7) conçu sous la forme d'une cascade de plusieurs unités d'onduleur (8), dans lequel chacune des unités d'onduleur (8) est connectée à sa propre source de tension continue (6) ;
- actionner un dispositif de commande (11) pour configurer les unités d'onduleur (8), dans lequel les unités d'onduleur (8) rendent la source de tension continue associée (6) disponible ou indisponible sur le côté de sortie pour la génération de la tension alternative (u_{AC}) en fonction de la consigne du dispositif de commande (11), et dans lequel les unités d'onduleur (8) transmettent des informations de statut relatives à source de tension continue respectivement associée (6) au dispositif de commande (11) par l'intermédiaire d'une ligne de données (D) d'un système de transmission de données (12), et dans lequel le dispositif de commande (11) transmet aux unités d'onduleur (8) des signaux de commande pour la configuration des unités d'onduleur (8) en fonction des informations de statut reçues par l'intermédiaire d'une ligne de commande (S) du système de transmission de données (12) ; et
- combiner plusieurs des unités d'onduleur (8) de manière à former un groupe de modules commun (24), dans lequel l'ensemble de circuits (5) comprend plusieurs desdits groupes de modules (24), et dans lequel chacun des groupes de modules (24) présente une entrée de commande de module (M_{IN}) qui est connectée à la totalité des entrées de commande (s_{IN}) des unités d'onduleur (8) du groupe de modules (24) et une sortie de données de module (M_{OUT}) qui est connectée à la totalité des sorties de données (S_{OUT}) des unités d'onduleur (8) du groupe de modules (24), dans lequel le système de transmission de données (12) comprend exactement une ligne de données (D) pour chacun des groupes de modules (24), dans lequel le dispositif de commande (11) comprend une porte d'entrée logique (25), de préférence une porte OU, qui est connectée sur le côté d'entrée aux lignes de données (D) et qui fournit une seule ligne de données combinée sur le côté de sortie en vue d'un traitement ultérieur à l'intérieur du dispositif de commande (11), et dans lequel chacun des groupes de modules (24) comprend une porte de sortie logique (26), de préférence une porte OU, qui est connectée sur le côté d'entrée aux différentes sorties de données (S_{OUT}) des unités d'onduleur (8) du groupe de modules (24) et sur le côté de sortie à la sortie de données de module (M_{OUT}) du groupe de modules (24).
